# EUROPEAN PATENT SPECIFICATION

(11) **EP 1 675 035 B1**
(45) Date of publication and mention of the grant of the patent: **19.05.2010**
(21) Application number: 04258037.3
(22) Date of filing: 22.12.2004
(51) Int. Cl.: G06K 7/10, G06K 19/06, G11B 15/68, G11B 17/22, H05K 5/02

(54) **Data library apparatus and method/program for controlling the same**
Gerät für eine Bibliothek zur Datenspeicherung und Verfahren/Programm zu seiner Kontrolle
Bibliothèque de stockage de données et procédé et programme de commande pour contrôler le même

(43) Date of publication of application: 28.06.2006
(73) Proprietor: FUJITSU LIMITED, Kawasaki-shi, Kanagawa 211-8588 (JP)
(72) Inventor: Hoshino, Keisuke, c/o Fujitsu Limited, Kawasaki-shi Kanagawa 211-8588 (JP)
(74) Representative: Stebbing, Timothy Charles

(56) References cited:
- US-A- 5 450 385
- US-B1- 6 246 642
- US-B1- 6 265 705
- PATENT ABSTRACTS OF JAPAN vol. 1999, no. 05, 31 May 1999 (1999-05-31) & JP 11 045306 A (NEC SHIZUOKA LTD), 16 February 1999 (1999-02-16)

## Description

The present invention relates to a technique for controlling a library apparatus to automatically read barcode labels of recording media such as magnetic tape cartridges stored in cells using a line scanning type reader installed in a medium carrier robot. More particularly, this technique can control a library apparatus to efficiently handle errors caused by scanning recording media to which no barcode label is affixed.

In conventional library apparatus, medium cartridges such as magnetic tape cartridges having barcode labels are stored one by one in a plurality of storage cells provided in the apparatus. The medium cartridges are picked up by the carrier robot from the storage cells designated as the origin according to the move command from the host, conveyed to a drive module as the destination by the move command and put into the drive module so that data are recorded or reproduced. The recorded or reproduced medium cartridges are picked up by the carrier robot from the drive module designated as the origin according to the move command from the host and returned back to the storage cells designated as the destination according to the move command.

The medium cartridge normally has affixed to it a barcode label, containing recorded medium control information, on the back surface thereof when it is put into the library apparatus. The barcode label of the medium is read by a barcode reader installed in the carrier robot. The barcode reader is of a form known in the art, such as a linear arrangement of LEDs combined with a one-dimensional CCD. The barcode label is scanned by the one-dimensional CCD while the LEDs are illuminated so that the barcode label can be read.

Japanese Patent Application Laid-Open Publications No.11-45306 and 2000-260089 propose an inventory operation to continuously read barcode labels of a number of medium cartridges stored in the apparatus and notify the host of the location and type of the medium cartridges when the necessary number of medium cartridges are put into the library apparatus and stored in the cells to start the operation.

The minimum operation unit of the inventory operation is one column, i.e. a longitudinal line of the storage cells in a storage cabinet in the apparatus. That is to say, the inventory operation is performed such that the carrier robot is moved and positioned at the top most cell in the column targeted for processing, then the carrier robot is moved up and down at a regular speed as the barcode reader is scanning to continuously read the barcode labels.

However, a medium cartridge which does not have any barcode label is sometimes stored in the library apparatus due to an oversight, or peeling off of the label. When such a medium cartridge is scanned by the barcode reader in the inventory operation, a reading error results; however, as to the cause of the error it is unclear whether a barcode label is not affixed, the barcode label is fouling or the barcode reader is at fault, based only on the scanning data obtained as the reading result.

Therefore, in the conventional library apparatuses, in case of a reading error at the time the inventory operation for one column is completed, a diagnosis process is executed to determine which of a failure of the barcode reader or a defect of the barcode label is the cause of error. If the reader is not at fault, the barcode label responsible for the error is subjected to a retry operation.

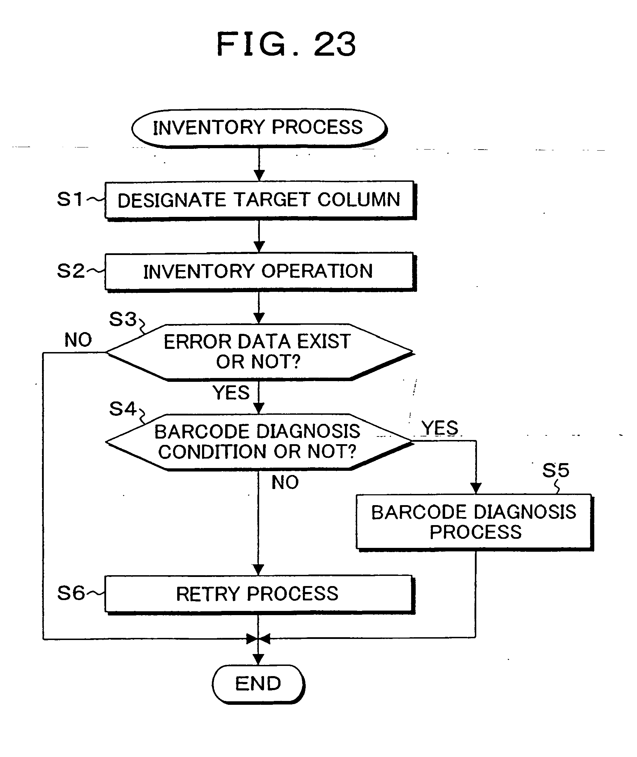

Fig.23 is a flowchart of the conventional inventory process, which is following procedure:
Step S1: Designate a target column for which the inventory operation is performed, and move the carrier robot to the top cell of the target column and position thereto.
Step S2: Continuously read the barcode labels of the medium cartridges stored in the column by moving the carrier robot up and down whilst scanning with the barcode reader (inventory operation).
Step S3: Check the presence or absence of any error in the reading result. If there is any error, advance to a step S4, otherwise, the process is completed.
Step S4: If the diagnosis of the barcode reader is that a plurality of scanning attempts for the same medium (three scanning data for each medium) have failed, advance to Step S5, otherwise advance to Step S6.
Step S5: Move the carrier robot to the medium cartridge at fault and position thereto, and execute a diagnosis process for the barcode reader.
Step S6: Move the carrier robot to the medium cartridge at fault and position thereto, and execute a retry process.

For the purpose of the retry process, the barcode label on a medium cartridge is divided into three regions such as an upper section, a middle section and a lower section, and each region is subdivided into five steps of scanning position. The barcode reader repeatedly operates so called stop-scanning to read each region during a predetermined period while the barcode reader is fixedly positioned at each scanning position. The above method using such a retry process is useful in the case that the barcode is fouling (semi-attached), however if no barcode label is present on the medium cartridge, unnecessary retry operations are repeated several times (for example, the stop-scanning operations are repeated the prescribed times such as fifteen times as the maximum number of times for retry)so that the process time is lengthened.

US-A-5450 385, against which the claims are delimited, describes an automated storage and retrieval system in which each storage cell is provided with a mark, such as a bar code label, which is detectable to a vision system when the cell is empty. Further, each item storable in a cell is also provided with a mark, such as a bar code label uniquely identifying the item, which is detectable by the vision system. During an inventory of the contents of the system, the vision system is moved across the openings of the cells and scans for the marks. If an item mark is detected, entries in a data table are made indicating the location of the cell being scanned and its occupied status. The identity of the item detected can also be entered into the data table. On the other hand, if a cell mark is detected, entries in a data table are made indicating the location of the cell being scanned and its empty status. If neither mark is detected at a cell, additional steps can be initiated to determine the status of the cell. Consequently, the location of each empty cell and each occupied cell can be positively identified and recorded in a single scanning operation. The identity of each stored item can also be recorded with its location in the same operation.

US-A-6246 642 describes an automated object detection system and method. The automated detection system uses an imaging apparatus, such as a bar code reader, to determine if an object is located at a predetermined location. The automated object detection system has a reference surface with a target located on the reference surface. The imaging apparatus is positioned relative to the reference surface so as to image the target. The automated object detection system is adapted to have objects located in a light path between the target and the imaging apparatus so as to block the target from being imaged. If the imaging apparatus is able to image the target, the automated optical detection system may determine that no object is located between the target and the imaging apparatus. If the imaging apparatus is unable to image the target, the automated optical detection system may determine that an object is located between the target and the imaging apparatus.

The present invention is defined in the attached independent claims, to which reference should now be made. Further, preferred features may be found in the dependent claims appended thereto.

It is therefore desirable to control a library apparatus to improve the process performance by shortening the processing time for the recording medium which has no barcode label attached in the inventory Operation.

The present invention is defined by the claims.

According to such library apparatus, if a recording medium having no barcode label is scanned in the inventory operation, the error data is extracted among the barcode label data obtained by the inventory operation and the cause of error identification processing is investigated. If it is determined that no label exists, the operation does not proceed to the retry process, thereby preventing an unnecessary retry process from being performed. In this way, needless operation is avoided so that the process is shortened and the process performance is improved.

The "cause of error specification processing unit" of the present invention makes a label determination processing unit perform a determination process based on the assumption that a barcode label does not exist if all of the plurality of scanning data for one recording medium are error data and the reading result of the preceding and following media are normal. In the label determination process, the following three cases determine that a label does not exist.

### (Case 1)

The label determination processing unit determines whether any barcode pattern exists or not in the scanning data which is determined to be in error, and if no barcode pattern exists, it is determined that there is no label provided that more than a threshold value of black pixels or white pixels exist at the center of the data.

### (Case 2)

The label determination processing unit determines the presence or absence of a start code or stop code (determines an error caused by a diffuse reflection and a pattern) if any barcode pattern exists in the scanning data which is determined to be an error, and if neither the start code nor the stop code exists, determines that a label does not exist provided that more than the threshold value of black pixels and white pixels are present at the center of the data.

### (Case 3)

The label determination processing unit determines a fouling (peeling) label based on whether N/W ratio (N is thin element width and W is thick element width) and a thin element width are within the standard value of the barcode format being used, if either the start code or the stop code exists in the scanning data which is determined to be an error, and if they are within the standard value, determines that a label does not exist provided that more than the threshold value of black pixels and white pixels are detected at the center of the data.

The label determination processing unit determines whether a plurality of scanning data read from the same recording medium are similar or not, if the threshold value of black pixels and white pixels is not exceeded at the center of the data in Case 1, 2 or 3, and if the plurality of scanning data are similar, the label is determined to be sub-standard, otherwise, the label is determined to be a handwritten label.

The "cause of the error identification processing unit" of the present invention makes a reader's failure determination unit perform a determination process based on the assumption that the reader is at fault if all of the plurality of the scanning data for the barcode label are the error data and the reading result of the next and previous media are not normal. The reader's failure determination unit determines the white/black ratio of the scanning data, and if the white/black ratio is not normal, a stop-scanning is performed to read by exposing one or more regions of the label during the predetermined period while the reader is moved by the medium conveyor. If this scanning fails and the white/black ratio is normal, the stop-scanning is repeated a predetermined times, and if all of the plurality of scanning data are similar, it is determined that the reader is faulty. Additionally, the reader's failure determination processing unit determines that no label is present when the stop-scanning fails and the white/black ratio is not normal.

A retry processing unit of the present invention performs stop-scanning to read a label area during the predetermined period such that the scanning frequency for the predetermined reading range is a multiple of the scanning frequency of the inventory processing unit while the reader is moved by the medium conveyor to the recording medium to be scanned. For example, in the_retry processing unit, the reading range of the label area on the medium is divided into three regions of upper, middle and lower part, and each region is stop-scanned at least five times every predetermined moving pitch.

Incidentally, the detail of the program and the method for controlling the library apparatus are essentially same as the library apparatus.

Other features and advantages of the present invention will become apparent upon reading the following brief description of the drawings and detailed description of the preferred embodiment.

In the drawings:
Fig.1 is a block diagram of the hardware configuration of the library apparatus according to the present invention;
Fig.2 shows the library apparatus with a front door open;
Fig.3 shows the library apparatus viewed through an open back door;
Fig.4 is a detailed view of the position of the carrier robot in Fig.2;
Fig.5 shows a carrier robot and a lift of the library apparatus;
Fig.6 shows the carrier robot by itself;
Fig.7 shows the carrier robot of Fig. 6 when viewed from below;
Fig.8 shows a barcode reader installed into the carrier robot;
Fig.9 shows a positional relationship between the barcode reader and the medium cartridge;
Fig.10 shows an example of a barcode label affixed to a medium (cartridge);
Fig.11 shows a back surface of the cartridge bearing the barcode label;
Fig.12 corresponds to Fig. 11 in the case of using a barcode label which is not recommended by the apparatus's maker;
Fig.13 shows the functional elements of a controller for the library apparatus;
Fig.14 shows an inventory process according to the present invention;
Fig.15 shows the inventory process targeting a specific column ;
Fig.16 is a more detailed illustration of the procedure of the inventory process;
Fig.17 is a flowchart of the inventory process according to the present invention;
Fig.18 is a flowchart of a cause of error specification process according to the present invention;
Fig.19 is a flowchart of a failure determination process which is performed for the barcode reader after the process of Fig.18;
Fig.20 is a flowchart of a process following that of Fig.19;
Fig.21 is a flowchart of a retry process which follows the process of Fig.20;
Fig.22 is a flowchart of the retry process followed by Fig.21; and
Fig.23 is a flowchart of the conventional inventory process.

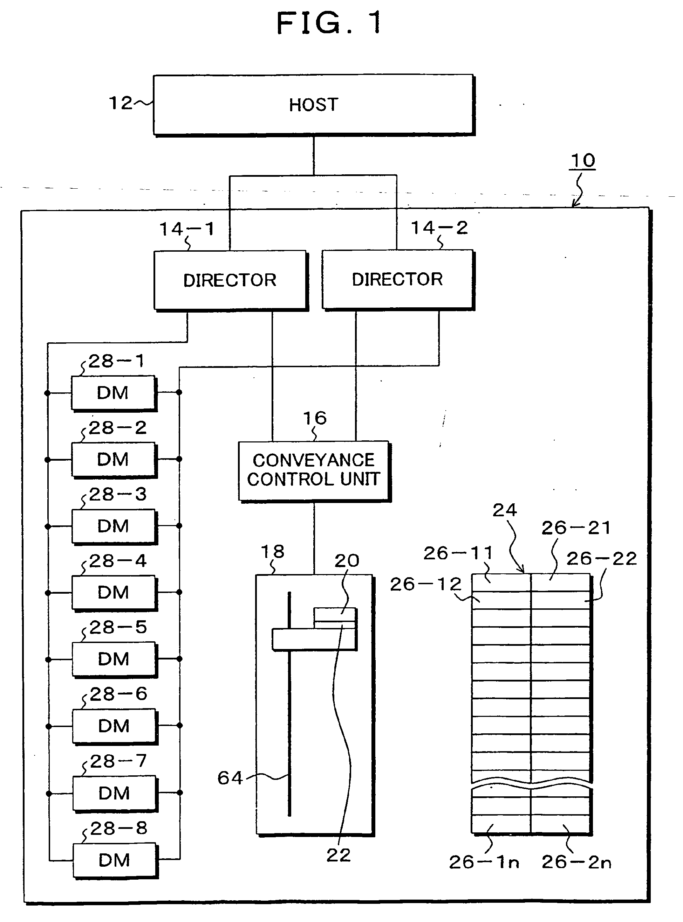

Fig.1 is a block diagram of the hardware configuration of the library apparatus according to the present invention. In Fig.1, the library apparatus 10 of the present invention is connected to a host 12. The library apparatus 10 is provided with a double director(switch unit) 14-1 and 14-2, a conveyance control unit 16, a conveyor 18, a cartridge storage cabinet 24, and eight drive modules to 28-1 from 28-8 as a recording/reproducing device. The number of drive modules can be changed within 1-16 according to the model building. The conveyor 18 is provided with a robot 20 moving in a longitudinal direction (Y direction)along a Y rail 64. A barcode reader 22 is installed into the carrier robot 20. A cartridge storage cabinet 24 is provided with a plurality of storage cells from 26-11 to 26-1n and from 26-21 to 26-2n which are stacked in two columns for example. In the present embodiment, magnetic tape cartridges as medium cartridges are stored in the cells of the cartridge storage cabinet 24. The director 14-1 operates as the main device among the double director 14-1 and 14-2. On receiving a read command of the cartridge medium from the host 12, the director 14-1 transfers the move command contained the read command to conveyance control unit 16. The conveyance control unit 16 recognizes a destination address (To address) from an origin address (From address). If it is the move command to pick up the medium cartridge from the cartridge storage cabinet 24 and input the device module, the conveyance control unit 16 makes the carrier robot 20 of the conveyor 18 position at the cell 26-11 of the cartridge storage cabinet 24, which is the origin address, pick up the cartridge medium stored in the cell, move to the drive module such as 28-11 designated by the destination address and input the cartridge medium in the drive module 28-11. Receiving the notice of the completion of the move command from the conveyance control unit 16, the director 14-1 transmits a startup command to the destination drive module 28-1 to reproduce the cartridge medium and transfers the read data obtained during reproducing to the host 12. If the director 14-1 receives the write command from the host 12, the medium cartridge is conveyed as described above. In such library apparatus 10, when a number of cartridge medium are inputted into the apparatus and the operation is started, the inventory process that the barcode labels affixed the medium cartridges stored in the cartridge cabinet 24 are continuously read by the barcode reader 22 of the carrier robot 20 to notify the host 12 of information which indicates the type of the medium stored. In such inventory process according to the present invention, the error data is extracted among the scanning data at the completion of the inventory process and the error data is analyzed, and if it is determined to be no label, the determination result of no label is notified the host 12 without executing a retry process.

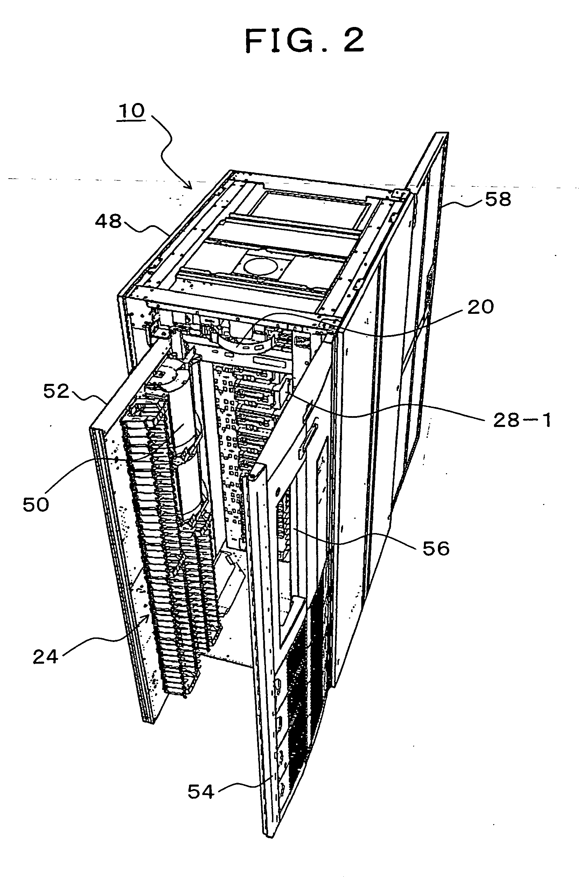

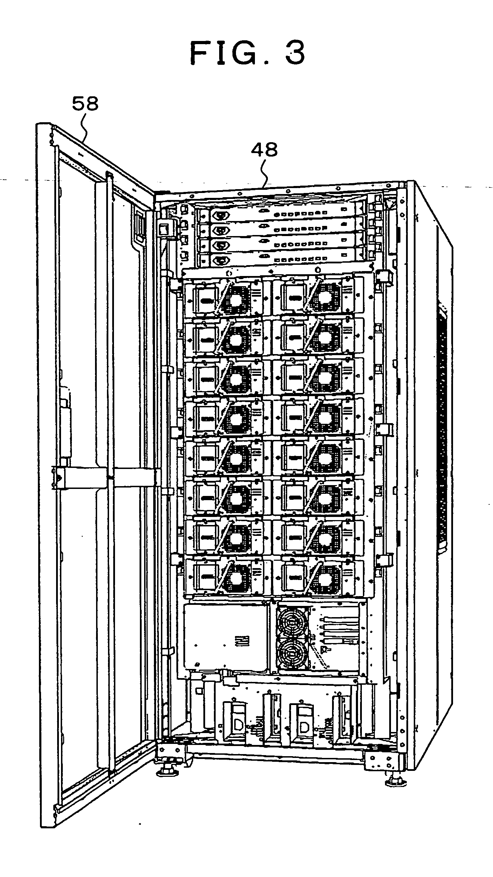

Fig.2 is an explanatory view of the library apparatus 10 showing the interior by opening the door. The library apparatus 10 has a housing 48. An inner door 52 is provided inside a front door 54 in the housing 48. A cartridge storage cabinet 24 in which the storage cells are arranged in multistage inside the inner door 52. A cartridge input/output mechanism 50 is provided in two-stage form for example. An input/output opening door 56 is provided in the front door 54 such that the input/output opening door 56 corresponds to the cartridge input/output mechanism 50. The drive module 28-1, 28-2--- are disposed at the position opposite the cartridge storage cabinet 24 inside the inner door of the housing 48. Where the cartridge input/output surfaces of the drive module 28-1, 28-2--- are directed inside the housing. The carrier robot 20 is disposed at the upper part of the 28-1 and this positional information is the initial position of the carrier robot 20. Fig.3 is a figure of the library apparatus 10 of the present invention looked from a back door 58.

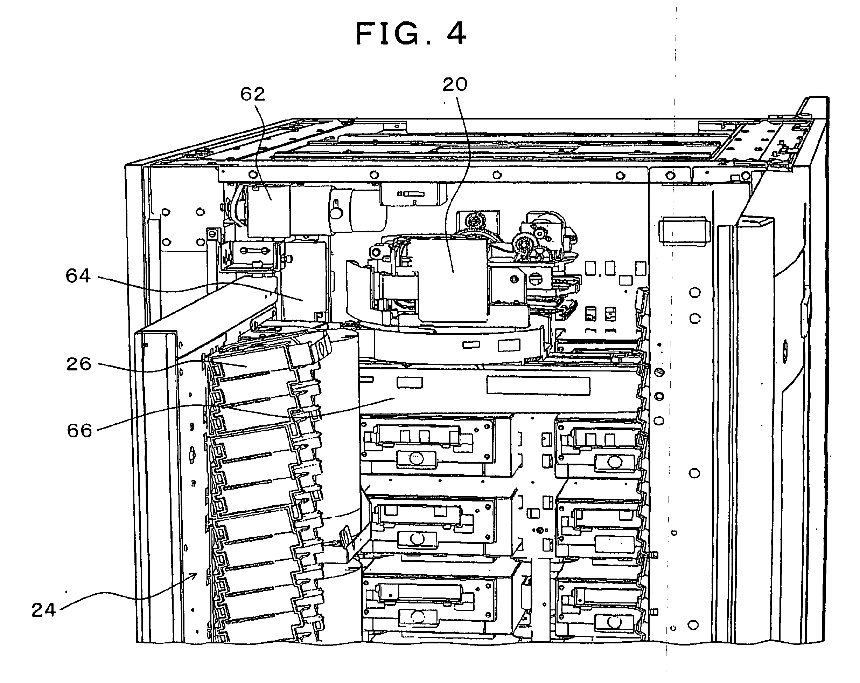

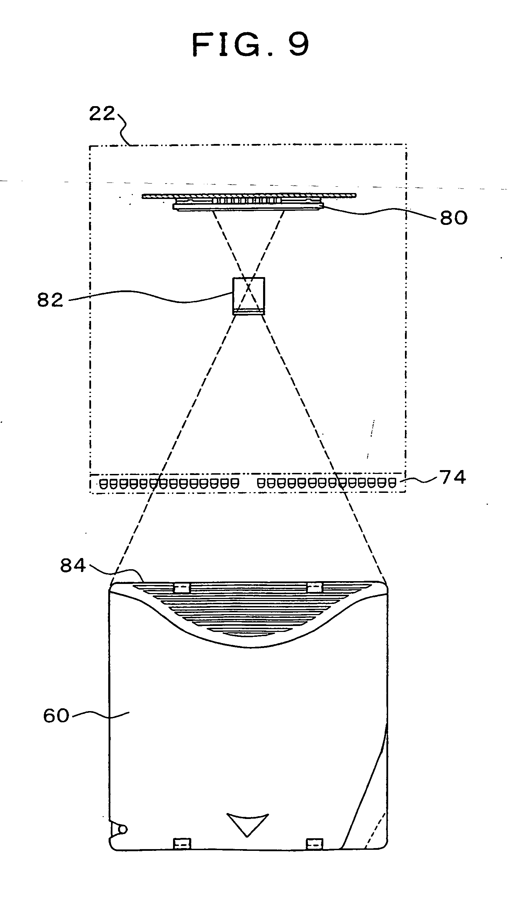

Fig.4 is an enlarged view of the portion where the carrier robot 20 is disposed in the library apparatus 10 in Fig.2. A Y rail 64 is disposed on the left side of the housing 48. The carrier robot 20 is mounted on a X stage 66 which slidably moves in the longitudinal direction to the Y rail 64. The X stage 66 on which the carrier robot is mounted is moved in the longitudinal direction by belt drive of a motor for Y move 62. The cartridge storage cabinet 24 provided inside the inner door 52 is provided with the cells 26 which are stacked in multistage and inclined such that the aperture is upwards. The medium cartridge 60 (see fig. 9) is stored in the cell 26 such shat the back end of the cartridge protrudes from the aperture of the cell 26 as shown in the top of the cells 26 of the figure.

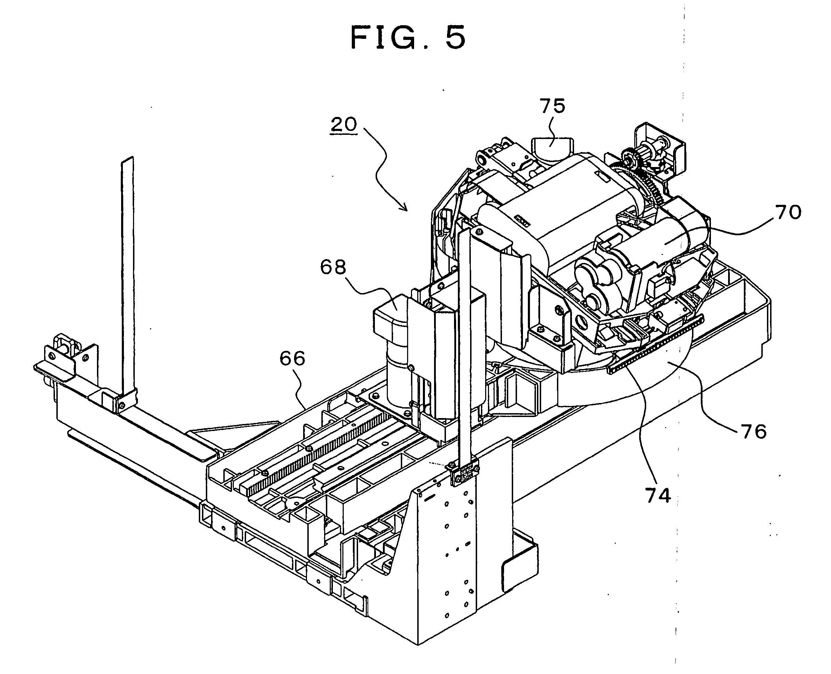

Fig.5 is a figure of the carrier robot 20 in the library apparatus of the present invention together with the X stage 66. The carrier robot 20 mounted on the X stage 66 can move in a horizontal direction by a motor for X move 68. The carrier robot 20 is mounted on a turn table 76 of the X stage 66 and can be turned on the X stage 66 by a motor for turning 75. A back and forth move motor for hooking 70 is mounted on the carrier robot 20. The inserted paw for hooking is taken in and out by the rotational control of the back and forth move motor for hooking 70 to picked up the cartridge. A lighting LED unit 74 is disposed at the medium cartridge pick up side of the carrier robot 20.

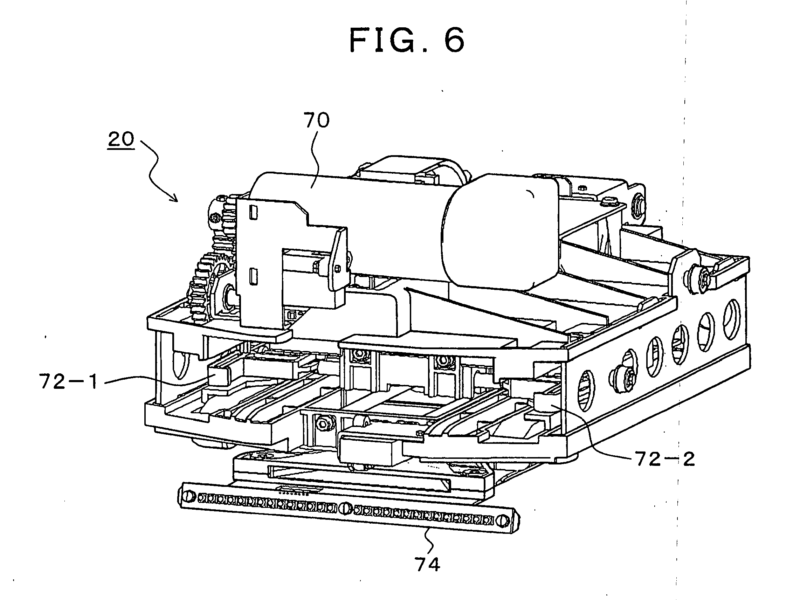

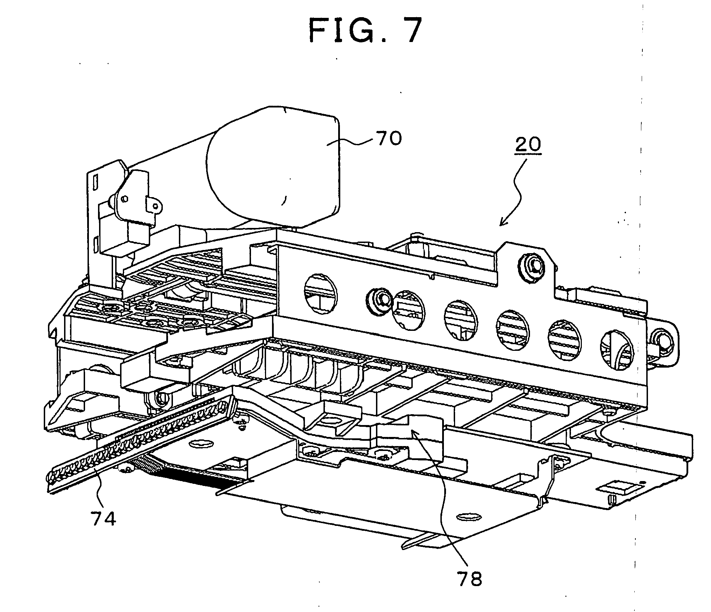

Fig.6 is a figure of the only carrier robot 20 of Fig.5. Fig.7 is a view of Fig.6 seen from below. The carrier robot 20 is provided with a pair of hooking pawls 72-1 and 72-2 in the aperture under which the lighting LED unit 74 is disposed. The hooking pawls 72-1 and 72-2 move forward by the rotational control of the back and forth move motor for hooking 70, pinch the medium cartridge stored in the cartridge storage cabinet 24 and draw it into the robot. In Fig.7 of the carrier robot 20 looked at from below, an inside of a case behind the lighting LED unit 74 is as a barcode reader storage unit 78.

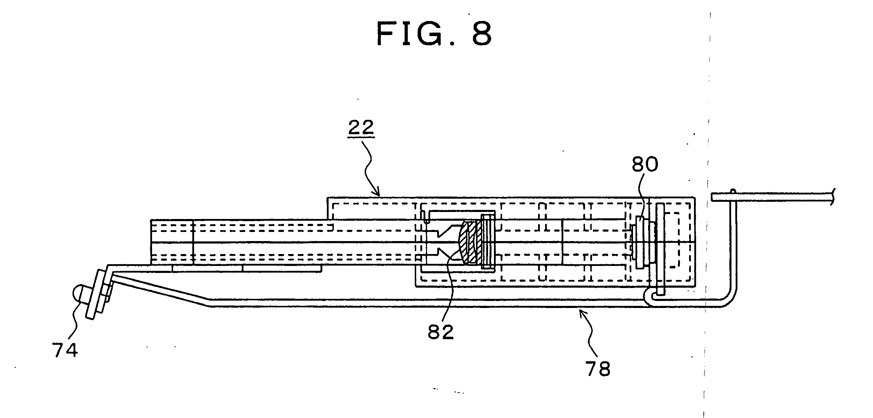

Fig.8 is an explanatory view of barcode reader 22 installed into the carrier robot 20. The barcode reader 22 is fitted into a barcode reader storage unit 78. A lighting LED unit 74 to illuminate the barcode label affixed on the back face of the medium cartridge is attached on the front edge of the barcode reader 22. A one-dimensional CCD 80 is provided inside the barcode reader 22 through a lens 82.

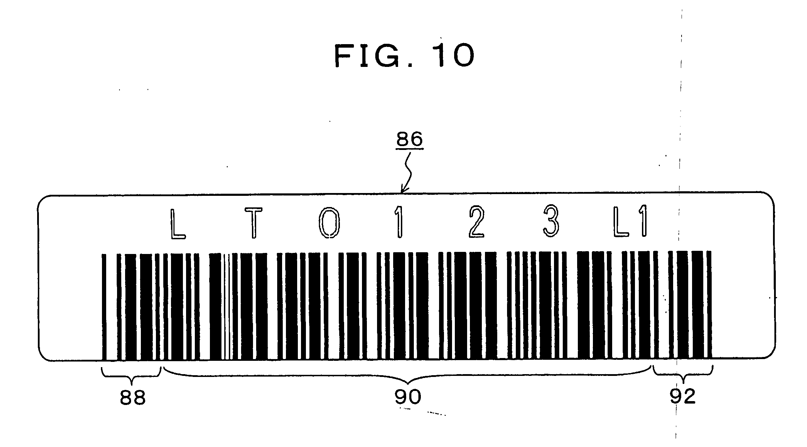

Fig.9 is an explanatory view of the relation between the barcode reader 22 in Fig. 8 and the medium cartridge 60 in a plane. In Fig.9, the medium cartridge 60 is stored in the cell of the cartridge storage cabinet 24. The back face portion of the medium cartridge protruding from the cell is as a label affixed surface 84. A barcode label 86 of Fig.10 is affixed on the label affixed surface 84. The barcode reader 22 is positioned at the back of the medium cartridge 60 targeted for reading by the carrier robot 20 and reads by imaging the code label to the one-dimensional CCD 80 through the lens 82 and scanning it while the label affixed surface 84 is illuminated by the lighting LED unit 74. The one-dimensional CCD 80 is imaging devices in which CCD light receiving elements are arranged on the straight line, and has the sufficient resolution for the barcode.

The barcode label 86 of Fig.10 is a barcode label used as the standard code in the library apparatus 10 of the present invention. The specification of the barcode label 86 may use the CODE 39 system. In the barcode label 86, the left side portion is a start code 88, the right side portion is a stop code 92, and a barcode 90 for eight characters (one character = nine bit) is disposed therebetween.

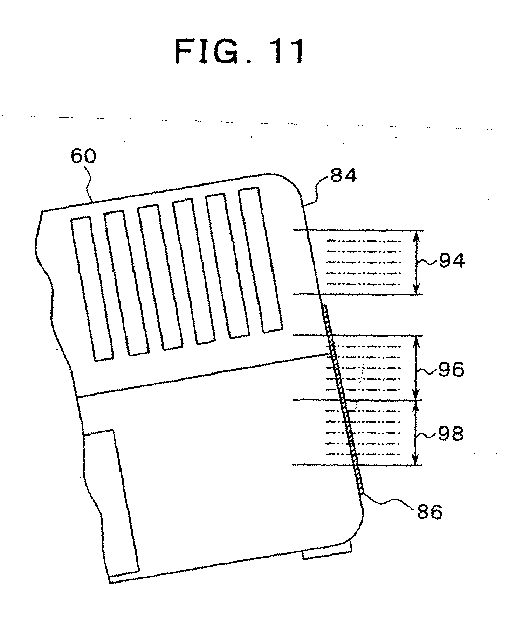

Fig.11 is an explanatory view of the back surface of the medium cartridge 60 affixed the barcode label 86 in Fig.10 on the label affixed surface 84. When the barcode label 86 affixed on the label affixed surface 84 of the medium cartridge 60 is continuously read by the barcode reader 22 while the carrier robot is moved up or down in the inventory operation in the library apparatus of the present invention, the barcode label 86 is scanned three times upon the barcode reader passes to obtain the scanning data. If the decoding results of the scanning data for twice among the three times of continuously scanning for the barcode label 86 are matched, the decoding is successful. Alternatively, if the decoding results of the scanning data for twice among the three times of scanning are not matched, it is determined to be an error and a cause of error specification process will be executed. In the cause of error specification process, if it is determined to be no label, the determination result is notified to the high-order device, alternatively, if the error is caused by other than no label, the retry operation is executed. When the retry operation is executed, the barcode reader 22 is moved to the medium cartridge 60 determined to be the faulty and the scanning is executed to retry. An upper region 94, a middle region 96 and a lower region 98 of the label affixed surface 84 are set as the scanning area for the cartridge 60 in the retry operation. Further, each region 94, 96 and 98 is subdivided into five scanning position as shown by the imaginary lines and scanned fifteen times as the maximum number of times in the retry operation. The scanning for the retry operation is the stop-scanning to read by exposing during the predetermined period while the barcode reader is fixedly positioned at the predetermined scanning position is executed. Additionally, the stop-scanning by positioning the barcode reader 22 at the medium determined to be the error is also applied to a barcode reader's failure diagnosis process for the error data.

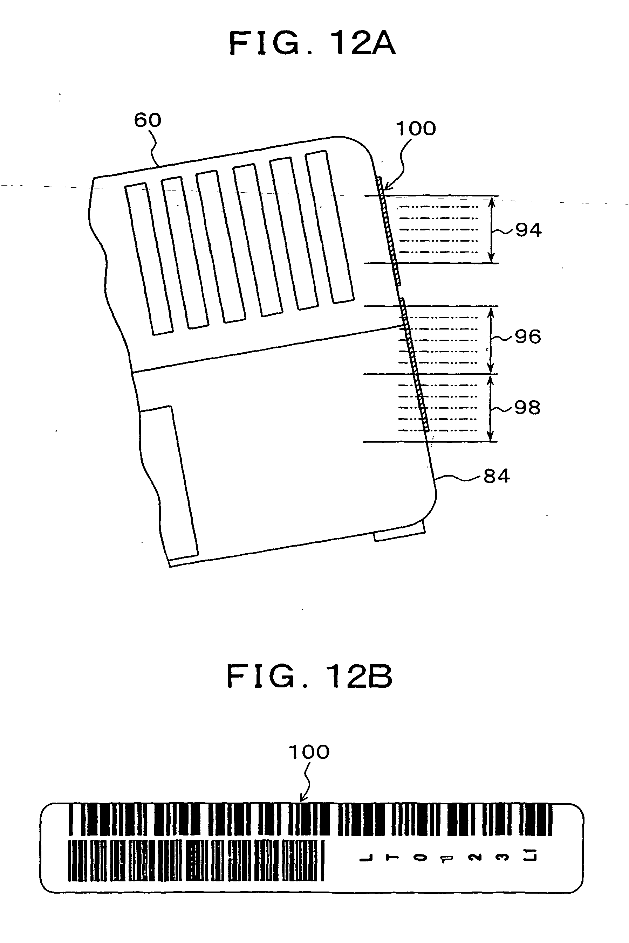

Fig.12 is an explanatory view of the back surface of the cartridge affixed the barcode label which is not recommended by the apparatus's maker. Fig.12A is a figure of the state that the non-recommendable barcode label 100 as the two-stage barcodes is affixed on the label affixed surface 84 of the medium cartridge 60. The non-recommendable barcode label 100 is a particular barcode label that such as the barcode of Fig.12B which is constructed by two stages. If such non-recommendable barcode label 100 affixed on the medium cartridge 60 is inputted into the library apparatus, the scanning data of the non-recommendable barcode label 100 is not always an error in the inventory operation, however, the incidence of a retry is increased and it is targeted for the cause of error determination process.

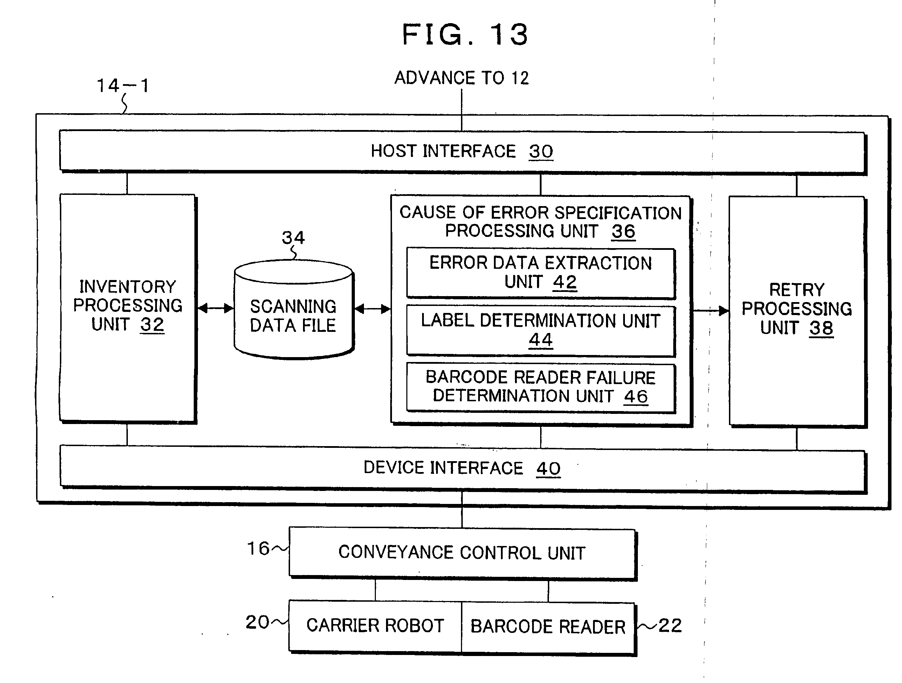

Fig.13 is a block diagram of the functional configuration of the control processing according to the present invention, which is provided in the director 14-1 and 14-2 of FIG.1 and the director 14-1 is taken as an example. In Fig.13, the director 14-1 is provided with a host interface 30, an inventory processing unit 32, a scanning data file 34, a cause of error specification processing unit 36, a retry processing unit 38 and a device interface 40. Further an error data extraction unit 42, a label determination unit 44 and a barcode reader's failure determination unit 46 are provided as the functions of the cause of error specification processing unit 36. Such function of each block of the director 14-1 is achieved by executing the program of the computer which performs the director 14-1. The computer hardware including MPU, ROM and an interface of both of the host side and the device side is used as the director 14-1. The program which provides the control processing of the present invention stored in such as a ROM is executed thereby the function of each block in the director 14-1 of Fig.13 is achieved. The inventory processing unit 32 provided in the director 14-1 reads by the barcode reader 22 the barcode label 86 affixed on the medium cartridge 60 by scanning per one label at least three times as the carrier robot 20 is moved in the cell array direction of the target column of the cartridge storage cabinet 24, i.e. moved from the top to bottom, and notifies the host of the successful reading if the decoding results between two times of scanning data are matched. The scanning data read in the inventory process by the inventory processing unit 32 is kept in the scanning data file 34 for the cause of error specification processing. The cause of error specification processing unit 36 extracts the error data from the scanning data of the scanning data file 34 obtained at the completion of process of the inventory processing unit, determines the presence or absence of the barcode label by analyzing the error data, and if it is determined that a barcode label exists, causes the retry processing unit 38 to execute a retry process, otherwise, reports the determination result as no label to the host without executing the retry process by the retry processing unit 38. The error data extraction unit 42 provided in the cause of error specification processing unit 36 extracts the error data from the scanning data file 34. Specifically, three times of scanning data are obtained per one barcode label. If the decoding result of two times among three times of scanning data are matched, the data is the normal data, alternatively, if each of the decoding result of three times of scanning data is not matched, the data is the error data. Such error data is extracted as the scanning data targeted for the cause of error determination processing. The label determination unit 44 determines that the cause of the error data extracted by the error data extraction unit 42 is whether no label or the other cause. The barcode reader's failure determination unit 46 operates when the failure of the barcode reader is tentatively determined in the process by the label determination unit 44 and executes the barcode reader's failure diagnosis process.

Where the determination process by the label determination unit 44 in the cause of error specification processing unit 36 is performed according to the following basic determination procedure:
(1) Check the other scanning data of the medium cartridge which occurs the error data and determine whether error data has also occurred or not;
(2) If any one of the scanning for the medium cartridge is successful, determine to be the fouling of the barcode label and/or the abnormality of the scanning position and go to the retry process;
(3) If all of the scanning results of the medium cartridge are the error, check the scanning result of the ahead and behind medium cartridges of the target medium cartridge, and if those are the error too, go to the barcode reader's failure diagnosis process based on the assumption that the barcode 22 is at fault;
(4) If it does not meet the condition of (2) and (3), shift to the following label determination process based on the assumption that the barcode label does not exist;
(5) Determine whether the code specific to the barcode is contained or not in the error data.
(6) If the code specific to the barcode is contained in the error data, the following steps are executed in order to determine whether the code specific to the barcode is caused by a diffused reflection or the pattern of the medium cartridge,
   (a) retrieve the start code and the stop code; and
   (b) determine whether N/W ratio (N is thin element width and W is thick element width) according to the specification of the barcode is within the standard value or not.
   If the determination reference (a) and (b) are satisfied, determine to be the fouling of the barcode label and shift to the retry process;
(7) If it does not meet the condition of (6), determine whether more than the threshold value of black pixels or white pixels sequence exists or not in the center of the error data. If more than the threshold value of black pixels or white pixels sequence exists, determine that the barcode label is not affixed on the medium cartridge, and notify the high-order device of no label ; and
(8) If it does not meet the condition of (7), compare all of the error data of scanning for one medium cartridge, and determine whether the data array is similar or not. If it is not similar, determine that the barcode label affixed on the medium cartridge is as a handwriting label, otherwise, determine the barcode label affixed on the medium cartridge is as a below the standard label and notify the high-order device of information of the abnormal label.

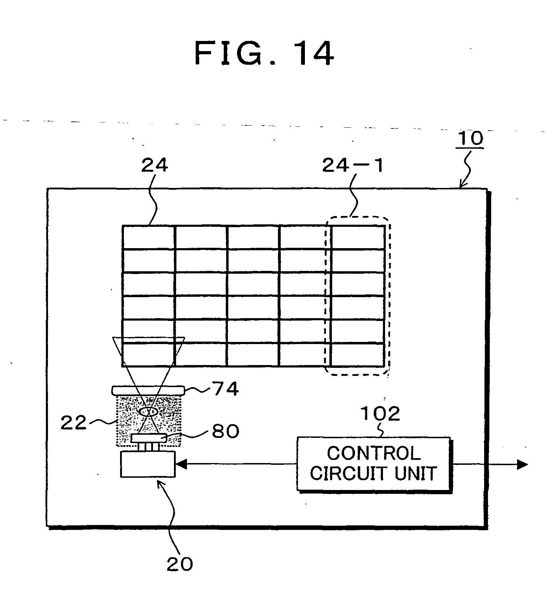

Fig.14 is an explanatory view of the inventory process according to the present invention. In Fig.14, in order to continuously read the barcode labels affixed on the medium cartridges stored in the cartridge storage cabinet 24 in the library apparatus 10, the carrier robot 20 is positioned at such as the top of the column 24-1 under the control of the control circuit 102, then the reading operation is performed as the barcode reader 22 is moved up or down at a regular speed by the carrier robot 20 while the lighting LED unit is turned on and scanning of the one-dimensional CCD 80 is activated. The directors 14-1 and 14-2, and the conveyance control unit 16 of Fig.1 are included in a control circuit 102.

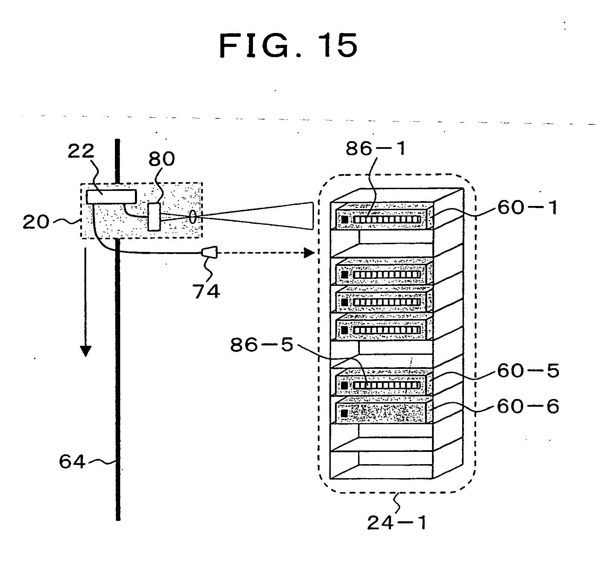

Fig.15 is an explanatory view of the inventory process targeting the specified column 24-1. The barcode reader 22 is positioned at a medium cartridge 60-1 stored in the top cell of the column 24-1 by the carrier robot 20 and reads by scanning of the one-dimensional CCD while the lighting LED 74 is turned on to illuminate the barcode label 86-1.

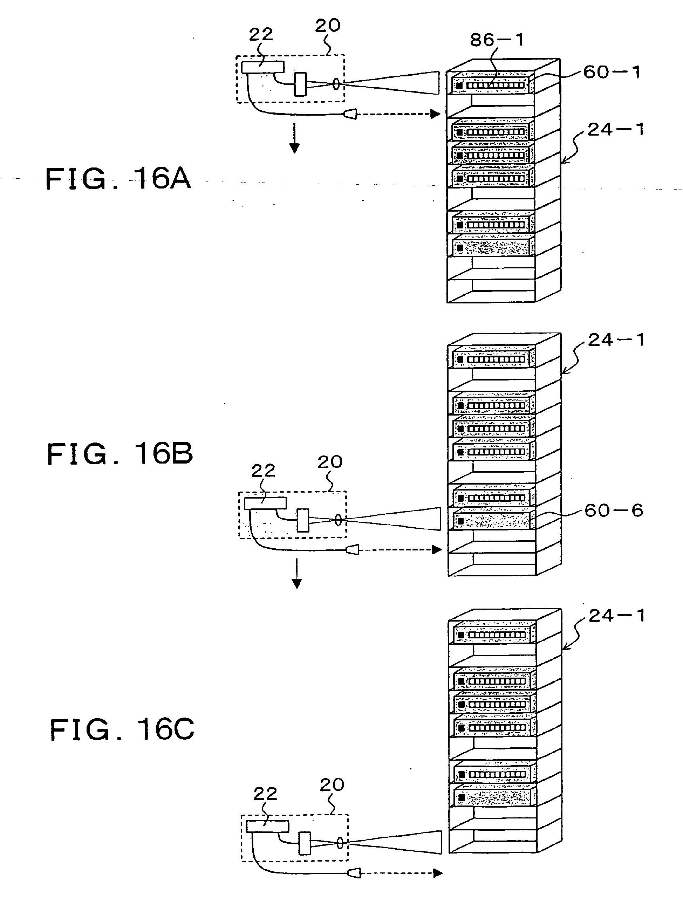

Fig.16 is an explanatory view separately showing the procedure of the inventory process. That is to say, in Fig.16A, the reading position of the barcode reader 22 is positioned at the barcode label 86-1 of the medium cartridge stored in the top cell of the column 24-1 and reads as the carrier robot 20 is moved downwardly at a regular speed. Fig.16B is an explanatory view of the state that the barcode reader 22 reaches the medium cartridge which is not affixed the barcode label 60-6 and reads it.
Fig.16C is an explanatory view of the state that the barcode reader 22 moves the lowest storage cell of the column 24-1 and the inventory operation is completed.

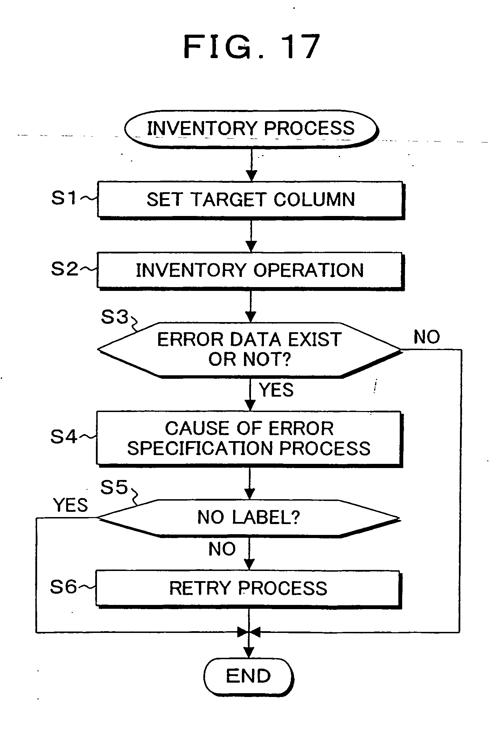

Fig.17 is a flowchart of the inventory process according to the present invention and the procedure is following:
Step S1: Set a certain column in the cartridge storage cabinet to the target column for the inventory process;
Step S2: Move the carrier robot 20 to the top of the target column and position the barcode reader 22 at the medium cartridge in the top storage cell, then execute to continuously read by the barcode reader as the carrier robot is moved downwardly at a regular speed (inventory operation);
Step S3: Determine whether any error data exists or not in the scanning data obtained at the completion of the inventory operation, and if the error data exists, advance to a step S4, otherwise, complete the process;
Step S4: Execute the error data specification process for the error data;
Step S5: If the specified result of the cause of error is no label, notify the host and complete the process, otherwise, advance to a step S6; and
Step S6: Execute retry process for the error data determined that the label exists as a rule.

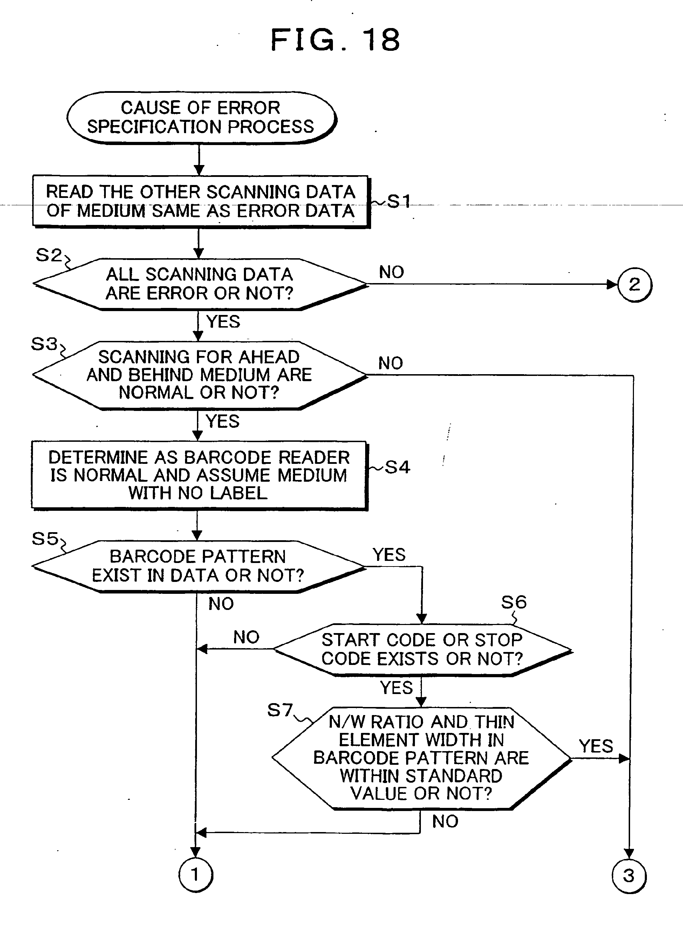

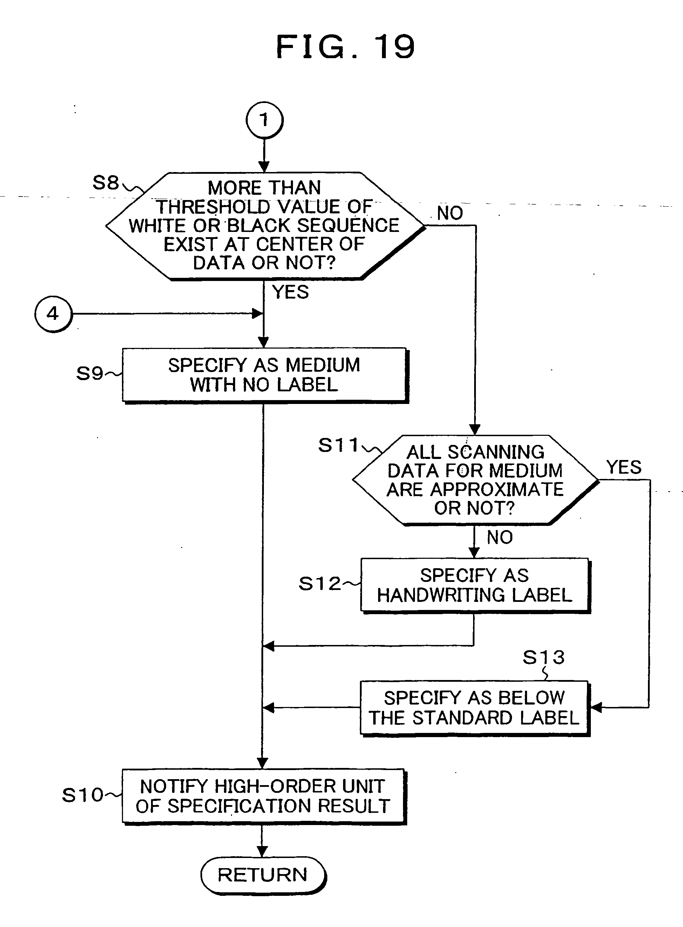

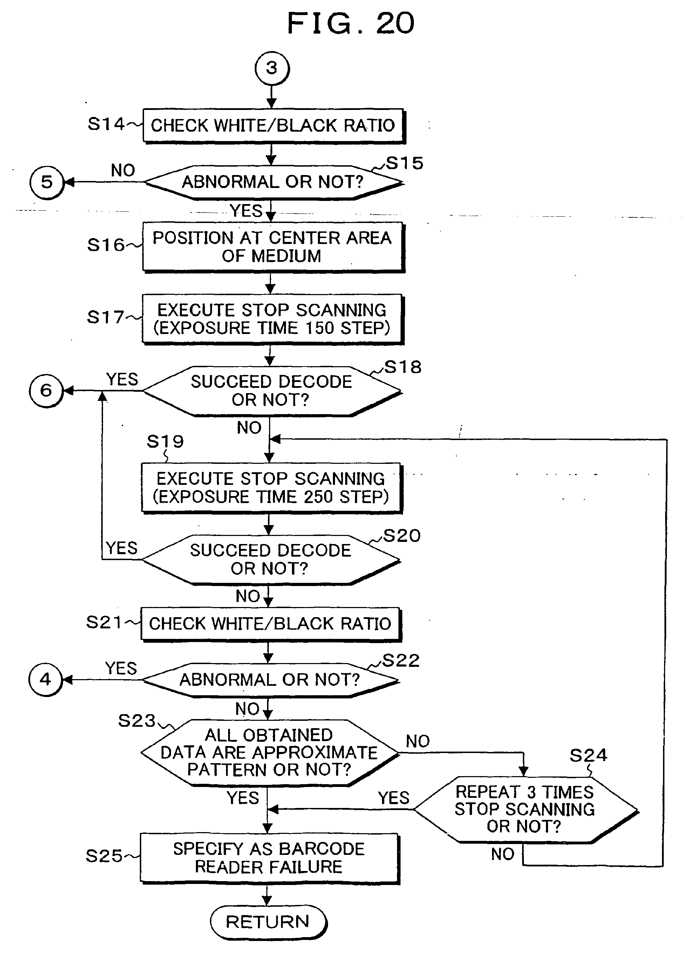

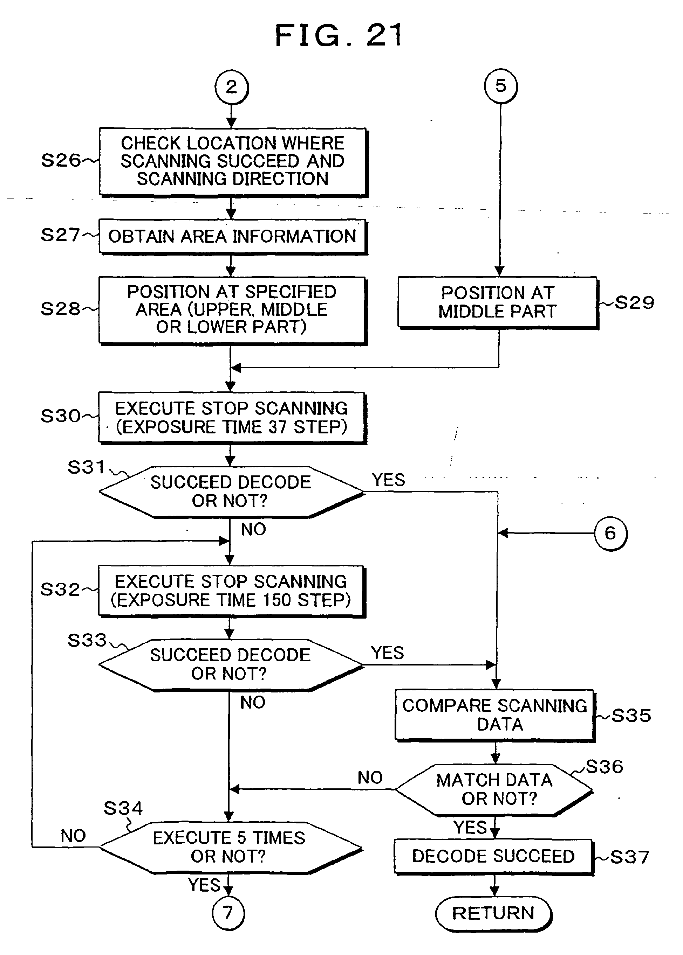

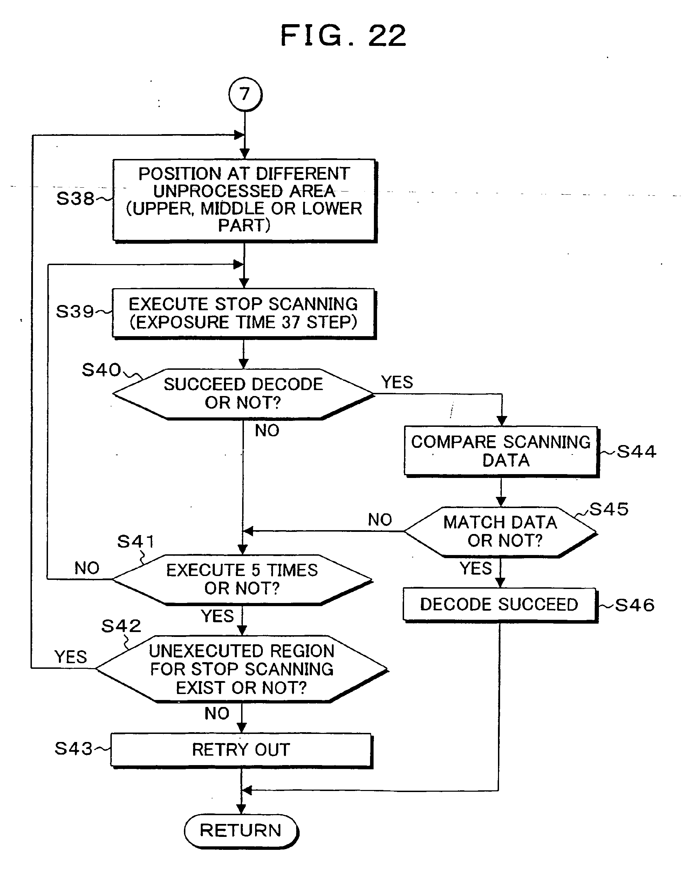

Fig.18, Fig.19, Fig.20, Fig.21 and Fig.22 are flowcharts representing the cause of error specification process and the retry process of the step S4-S7 of Fig.17 in detail. The procedure of the flowcharts has the content of the program for the inventory process according to the present invention. Fig.18 is a flowchart of the cause of error specification process to determine to be no label. Subsequently, the flowcharts of Fig.19 and Fig.20 are mainly the procedure of barcode reader's failure determination process. The flowcharts of Fig.21 and Fig.22 are mainly the procedure of the retry process.

Firstly, the procedure of the flowchart for the cause of error specification process to determined whether the presence or absence of the barcode label of Fig.18 is described as follows:
Step S1: Read the other scanning data in the same medium as the error data extracted as processing target. Three scanning data including the error data are read according to the present invention;
Step S2: determine whether all of the scanning data are the error data or not, and if the all of the scanning data are the error data, advance to a step S3, otherwise, advance to a step S26 in the retry process of Fig.20;
Step S3: Determine whether the scanning data of the ahead and mediums of the medium determined that all scanning data are the error data are normal or not. If the data are normal, advance to a step S4, otherwise, advance to a step S14 in the barcode reader's failure diagnosis process of Fig.20 based on the assumption that the barcode reader is at fault;
Step S4: Since the scanning of the ahead and behind medium of the medium determined that all of the scanning data are the error data is normal, determine that the barcode reader is not at fault and shift to the label determination process including the following step S5-step S13 based on the assumption that the medium is no label;
Step S5: Firstly, determine whether any barcode pattern exists or not in the error data. If the barcode pattern exists, advance to a step S6, otherwise, advance to a step S8 of Fig.19;
Step S6: Determine whether the start code or the stop code exists or not in the barcode pattern. If at least either start code or stop code exists, advance to a step S7, otherwise, advance to a step S8. The determination is based on whether the barcode pattern of the error data is caused by a diffused reflection or the pattern of the medium;
Step S7: Determine whether the N/W ratio and the thin element width are within the standard value, respectively or not. If the N/W ratio and the thin element are out of the standard value, advance to a step S8 of Fig.19, otherwise, advance to a step S14 of Fig.20 in the barcode reader's failure diagnosis process based on the assumption that the barcode reader 22 is at fault. The determination is based on a fouling of the barcode;
Step 8: Determine whether more than the threshold value of white pixels or black pixels sequence exists or not in the center of the error data. If more than the threshold value of white pixels or black pixels sequence exists, advance to a step S9, otherwise, advance to a step S11;
Step 9: Since more than the threshold value of white pixels or black pixels sequence does not exist in the center of the error data, determine that the medium is no label;
Step 10: Notify the host of the cause of error specification result including the specification result of the medium with no label;
Step 11: In case of more than the threshold value of white pixels or black pixels sequence does not exist in the center of the error data, determine whether all of the three scanning data for the medium are similar or not. If all of the three scanning data are similar, advance to a step S12, otherwise, advance to a step S13;
Step S12: Since the all of the scanning data are not similar, specify that it is a handwriting label and advance to the step S10 and notify of the specified result the high-order device; and
Step S13: Since the all of the scanning data are similar, specify that it is a below the standard barcode label 100 as Fig.12B for example. Advance to the step S10 and notify of the specified result the host.
   As thus described above, if the error data is analyzed in the step S1-S10 of Fig.18 and Fig.19 and it is determined to be no barcode label, the determination result of no label is notified the host and the process can be completed without executing the retry process required the stop-scanning fifteen times at the maximum.
   Next, the procedure of the barcode reader's failure diagnosis process in the main is described with reference to the flowchart of Fig.20. The procedure of the barcode reader's failure diagnosis process in the main is as the following a step S14-S25:
Step S14: It is the case that all of the scanning data for one medium are the error data in the step S2 or the N/W ratio and the thin element width of the barcode pattern are within the standard value in the step S7 of Fig.18, check the white/black ratio of the error data;
Step S15: If the white/black ratio is not normal, advance to a step S16, otherwise, advance to a step S29 in the retry process of Fig.21;
Step S16: If the white/black ratio is not normal, position the barcode reader 22 at a center area 96 of the medium cartridge 60 of Fig.11 by the carrier robot 20;
Step S17: Expose during the certain exposing period such as 150 steps (1 step is a run unit of the program), then perform the stop-scanning to output the accumulation result of the one-dimensional CCD while the barcode reader 22 is positioned at the center area of the medium cartridge;
Step S18: Determine whether the decoding of the scanning data with the stop-scanning data is successful or not, and if it is successful, advance to a step S35 in the retry process of Fig.21, otherwise, advance to a step S19;
Step S19: Perform the stop-scanning by the exposure time 250 steps of the barcode reader at the same position as the step S16. In this case the exposure time is longer than that of the step S17 by 100 steps;
Step S20: Check whether the decoding is successful or not for the scanning data by the stop-scanning with the exposure time 250 steps, and if the decoding is successful, advance to a step S35 in the retry process of Fig.21, otherwise, advance to a step S21;
Step S21: Check the white/black ratio based on the scanning data by the stop-scanning of the step S19;
Step S22: If the white/black ratio is not normal, advance to the step S9 of the Fig.19. In this case, specify also the medium with no barcode label and notify the host. If the white/black ratio is normal, advance to a step S23;
Step S23: Determine whether all of the scanning data obtained by the stop-scanning are similar pattern or not, and if all of the scanning data obtained from the stop-scanning are not similar pattern, advance to a step S24, otherwise, advance to a step S25;
Step S24: Determine whether the stop-scanning is repeated three times when all of the scanning data are not similar pattern, and if the stop-scanning is not repeated three times, return to the step S19, otherwise, advance to a step S25; and
Step S25: Since all of the data obtained from the three times of stop-scanning are similar pattern, specify that the barcode reader 22 is at fault and notify the host.
   As thus described above, in the process of the step S14-S25, the diagnosis process is executed based on the assumption that the barcode reader 22 is at fault and the failure of the barcode reader is specified. In the other case, it is determined to be none of duplication and shift to the retry process.
   Next, the procedure the retry process in the main is described with reference to the flowcharts of Fig.21 and Fig.22. In the retry process, each of the upper region 94, the middle region 96 and the lower region 98 (see Fig. 11) of the label affixed surface 80 of the barcode label 86 is subdivided into five regions, respectively, giving the 15 regions of Fig.11 so that the scanning is performed maximum 15 times for the cartridge determined to be the error. Fig.21 is a flowchart of the first stop-scanning at the maximum five times among the three regions. Fig.22 is a flowchart of each stop-scanning at the maximum five times of the remaining two regions in the retry process. Now the procedure of the retry process for the first one of Fig.21 is as the following S26-S37:
Step S26: It is the case that any of the three times of the scanning of one medium becomes the error in the step S2 of Fig.18. In this case, check the scanning location and the direction where the scanning data is normal;
Step S27: Obtain area information including the location where the scanning is successful in the medium cartridge;
Step S28: Move the barcode reader 22 by the carrier robot 20 to the upper, middle or lower region specified in the step S27 and position it at beginning position of the five scanning location in the specified region;
Step S29: It is the case that the white/black ratio is not normal when the white/black ratio is checked be based on the assumption that the barcode reader 22 is at fault in the step S15 of Fig.20. In this case, position the barcode reader 22 by the carrier robot 20 at the beginning position of the five places of the middle region 96 in the cartridge 60 to be targeted;
Step S30: Execute the stop-scanning of the exposure time 37 steps;
Step S31: Determine whether the decoding of the scanning data by the stop-scanning is successful or not, and if the decoding is successful, advance to a step S35, otherwise, advance to a step S32;
Step S32: Execute the stop-scanning of the exposure time 150 steps;
Step S33: If the decoding is successful, advance to a step S35, otherwise, advance to a step S34;
Step S34: Check whether the stop-scanning is executed five times, and if it is not executed five times, return to the step S30, and move to the next scanning position to execute the stop-scanning, otherwise, advance to a step 38 of Fig.22;
Step S35: It is the case that the decoding by the stop-scanning is successful in any of the step S31, the step S33 and step S18 of Fig.20 or step S20, in this case, compare the scanning data;
Step S36: If the compared scanning data is matched, advance to a step S37, otherwise, advance to the step S34; and
Step S37: Determine that the scanning by the retry process is successful, notify the host of the decoding result and complete the process.
   Next, the retry process for the remaining two regions of the medium cartridge targeted for the retry of Fig.22 is as the following S38-S46:
Step S38: Position the barcode reader at the beginning position of the unprocessed region other than the processed region, i.e. any one of the remaining upper, middle or lower region of Fig.21;
Step S39: Execute the stop-scanning of the exposure time 37 steps;
Step S40: If the decoding is successful, advance to a step 44, otherwise, advance to a step 41
Step S41: Check whether the stop-scanning is executed five times or not and if the stop-scanning is not executed five times, return to the step 39, otherwise, advance to a step 42;
Step S42: Check whether any region where the stop-scanning is not executed exists or not and if the region where the stop-scanning is not executed exists, return to the step S38, otherwise, advance to a step 43;
Step S43: Since even if all of the stop-scanning fifteen times are executed, the decoding is not successful, Determine to be retry out and notify the host of the inability of the decoding.
Step S44: It is the case that the decoding by the stop-scanning is successful in the step S39. Compare the scanning data;
Step S45: If the scanning data are matched, advance to a step S46, otherwise, advance to the step 41; and
Step S46: Determine the retry process by the stop-scanning is successful, notify the high-order device of the result and complete the process.

As evidenced by the retry process of the flowchart of Fig.21 and Fig.22, if it is not determined to be no label in Fig.18 and Fig.19, and also if it is not determined that the barcode reader is at fault in Fig.20, the stop-scanning is executed at the maximum fifteen times in the retry process of Fig. 21 and Fig.22, the decode is not successful and the retry process is finished. If the cause of error specification process regarding no barcode label in Fig.18 and Fig.19 is not executed as usual, the retry process by the stops scanning fifteen times executed for all of the cartridge medium to be no label in Fig.21 and Fig.22, and the retry process is stopped so that it takes significantly long time to process. Alternatively, in the present invention, since the retry process for such medium with no label is not required so that when an error data is generated in the inventory process, the processing time is shortened and thereby the process performance can be improved.

The present invention includes appropriate modifications and is not limited to numeric numbers indicated in the above embodiment. Especially, regarding the hardware configuration of Fig.1 and the apparatus configurations of Fig.3-Fig.7, provided that any library apparatus comprises a medium storage to store medium cartridges affixed barcode labels by handling unit, a plurality of recording /reproducing device to record and reproduce the medium cartridges, a medium conveyor as a carrier robot to convey the medium between the medium storage and the recording/reproducing device based on the move command from a host, and a barcode reader to optically read the barcode label of the medium cartridge carried on the medium conveyor by line scanning with one-dimensional imaging pixels may be applied.

As thus described above, according to the present invention, if in the inventory operation to check the type of the medium stored in the apparatus, the recording medium which is not having a barcode label is scanned, the error data is extracted from the scanning data of the barcode labels obtained by the inventory operation, the cause of error specification process is executed so that it is determined to be no label. Thereby if it is no label, that matter is notified the high-order device and the process can be completed without shifting the retry process. Therefore, the unnecessary retry process for the cartridge with no label is not executed and useless operation for the error data caused by the medium with no label is eliminated so that the time for the inventory operation is shortened, and thereby the process performance can be improved.

Further, a handwriting label, a below the standard label and also the failure of the barcode reader are specified as the error data all together through the no label determination process thereby the error data generated in the inventory operation can be appropriately handled.

## Claims

1. A library apparatus (10) comprising:
a medium storage (24) having a plurality of storage cells (26-11 to 26-1n) (26-21 to 26-2n) for storing recording media (60) having barcode labels (86);
a recording/reproducing device (28) for either recording or reproducing information using the recording media (60);
a medium conveyor (18) for conveying the recording media (60) between the medium storage (24) and the recording/reproducing device (28); and
a reader (22) for reading optically the barcode labels (86) of the recording media (60) carried on the medium conveyor by line scanning with one-dimensional imaging pixels,
wherein the library apparatus (10) further comprises:
an inventory processing unit (32) for reading the barcode labels of the recording media (60) by scanning a plurality of times per one label while moving the medium conveyor (18) and notifying of stored medium information; and
a cause of error specification processing unit (36):
- for determining the presence or absence of the barcode label (86) by extracting erroneous data from a reading result obtained by the inventory processing unit (32);
- for executing a predetermined retry process, in which said reader (22) is moved to and stopped at a position of the recording medium where the erroneous data is scanned, by means of said medium conveyor (18), if it is determined that a barcode label exists; and
- for reporting a determination result without executing the retry process, if it is determined that a barcode label does not exist,
**characterised in that**:
the cause of error specification processing unit (36) causes a label determination processing unit (44) to execute a determination process based on the assumption that a barcode label (86-2) does not exist on one recording medium (60-2) if, at the completion of the inventory process, it is determined that all of the plurality of scanning data for said one recording medium (60-2) are erroneous data and the reading results of the ahead and behind recording medium (60-1, 60-3) are normal.

2. The library apparatus according to claim 1, wherein the label determination processing unit (44) is arranged to determine whether a full barcode pattern exists or not in the erroneous data, and to determine, if the barcode pattern does not exist, that a label does not exist on the medium, provided that more than a threshold of consecutive black pixels or more than a threshold of consecutive white pixels exist at the center of the said data.

3. The library apparatus according to claim 2, wherein the label determination processing unit (44) is arranged to determine the presence or absence of a start code or a stop code if the barcode pattern exists in the erroneous data, and to determine there to be no label provided that more than the threshold of consecutive black pixels or more than a threshold of consecutive white pixels exist at the center of the said data if neither the start code nor the stop code exists.

4. The library apparatus according to claim 2, wherein the label determination processing unit (44) is arranged to determine whether a N/W ratio and a thin element width are within a standard range if at least either a start code or a stop code exists in the erroneous data, and to determine there to be no label provided that more than a threshold of consecutive black pixels or more than a threshold of consecutive white pixels exist at the center of the said data if the N/W ratio and the thin element width are within a standard range, N being the width of a thin barcode element, W being the width of a thick barcode element.

5. The library apparatus according to any of claims 2-4, wherein the label determination processing unit (44) is arranged to determine whether a plurality of scanning data read from the same recording medium are similar or not if more than a threshold value of black pixels or white pixels does not exist, and to determine there to be a below-standard label if the plurality of scanning data are similar, otherwise, to determine there to be a handwriting label.

6. The library apparatus according to claim 1, wherein the cause of error specification processing unit (36) is arranged to cause a reader's failure determination processing unit to execute a determination process based on the assumption that the reader is faulty if all of the plurality of scanning data for the barcode label (86) are erroneous data and the reading result of the ahead and behind recording medium are erroneous data.

7. The library apparatus according to claim 6, wherein the reader's failure determination processing unit (46) is arranged to determine a white/black ratio of the scanning data, execute a stop-scanning to read by exposing, during a predetermined period, the barcode label (86) of said recording medium to said reader (22), while the reader is moved by the medium conveyor (18) to, and is fixedly positioned at, the recording medium where the erroneous data is scanned, if the white/black ratio is not normal, repeat the stop-scanning a predetermined number of times if the stop-scanning data cannot be decoded and the white/black ratio is normal, and determine that the reader is faulty if all of the plurality of scanning data are similar.

8. The library apparatus according to claim 7, wherein the reader's failure determination unit (46) is arranged to determine there to be no label if the stop-scanning data cannot be decoded and the white/black ratio is not normal.

9. The library apparatus according to claim 1, wherein in a retry process by the cause of error specification processing unit (36), a stop-scanning is executed to read by exposing, during the predetermined period, the barcode label (86) of said recording medium to said reader (22), such that the scanning frequency within a predetermined reading range becomes the multiple of the scanning frequency of the inventory processing unit, while the reader (22) is moved by the medium conveyor to, and is fixedly positioned at, the recording medium where the erroneous data is scanned.

10. The library apparatus according to claim 9, wherein in the retry process by the cause of error specification processing unit (36), the reading range of the reading medium is divided into an upper region, a middle region and a lower region, and the stop-scanning for each region is executed at least five times every predetermined moving pitch.

11. A method for controlling a library apparatus (10) comprising:
a medium storage (24) having a plurality of storage cells (26-11 to 26-1n) (26-21 to 26-2n) for storing recording media (60) having barcode labels (86),
a recording/reproducing device (28-1 to 28-8) for either recording or reproducing information using the recording media (60),
a medium conveyor (18) for conveying the recording media (60) between the medium storage (24) and the recording/ reproducing device (28-1 to 28-8),
and a reader (22) for optically reading the barcode labels (86) of the recording media (60) carried on the medium conveyor (18) by line scanning with one-dimensional imaging pixels,
the method for controlling the library apparatus (10) comprising the steps of:
an inventory processing step for reading the barcode labels (86) of the recording medium (60) by scanning a plurality times per one label while moving the medium conveyor (18) and notifying of stored medium information; and
a cause of error specification processing step:
- for determining the presence or absence of the barcode label by extracting erroneous data from the reading result obtained by the inventory processing step;
- for executing a predetermined retry process in which said reader (22) is moved to and stopped at a position of the recording medium where the erroneous data is scanned, by means of said medium conveyor (18), if it is determined that a barcode label exists; and
- for reporting a determination result without executing the retry process if it is determined that a barcode label does not exist,
**characterised in that**:
the cause of error specification processing step causes a label determination processing step to execute a determination process based on the assumption that a barcode label does not exist on one recording medium if, at the completion of the inventory process, it is determined that all of the plurality of scanning data for said one recording medium are erroneous data and the reading results of the ahead and behind recording medium are normal.

12. The method for controlling the library apparatus according to claim 11, wherein the label determination processing step determines whether a full barcode pattern exists or not in the erroneous data and if the barcode pattern does not exist, it is determined to be no label provided that more than a threshold of consecutive black pixels or more than a threshold of consecutive white pixels exist at the center of the said data.

13. The method for controlling the library apparatus according to claim 12, wherein the label determination processing step determines the presence or absence of a start code or a stop code if the barcode pattern exists in the erroneous data, and determines that a label does not exist on the medium, provided that more than a threshold of consecutive black pixels or more than a threshold of consecutive white pixels exist at the center of the said data if neither the start code nor the stop code exists.

14. The method for controlling the library apparatus according to claim 12, wherein the label determination processing step determines whether a N/W ratio and a thin element width are within a standard range if at least either a start code or a stop code exists in the erroneous data, determines to be no label provided that more than a threshold of consecutive black pixels or more than a threshold of consecutive white pixels exist at the center of the said data if the N/W ratio and the thin element width are within a standard range, N being the width of a thin barcode element, W being the width of a thick barcode element.

15. A computer implemented-program of a library apparatus comprising a medium storage (24) having a plurality of storage cells for storing recording media (60) having barcode labels, a recording/reproducing device (28-1 to 28-8) for either recording or reproducing information using the recording media (60), a medium conveyor (18) for conveying the recording media (60) between the medium storage (24) and the recording/reproducing device (28-1 to 28-8), and a reader (22) for reading optically the barcode labels of the recording media (60) carried on the medium conveyor (18) by line scanning with one-dimensional imaging pixels, the computer implemented program of the library apparatus (10) being adapted to perform the method of any of claims 11 to 14.

## Patentansprüche

1. Bibliotheksvorrichtung (10) mit:
einem Medienspeicher (24), der eine Vielzahl von Speicherzellen (26-11 bis 26-ln) (26-21 bis 26-2n) zum Speichern von Aufzeichnungsmedien (60) hat, die Strichcodeetiketten (86) haben;
einer Aufzeichnungs-/Wiedergabeanordnung (28) entweder zum Aufzeichnen oder Wiedergeben von Informationen unter Verwendung der Aufzeichnungsmedien (60);
einer Medienbeförderungsanlage (18) zum Befördern der Aufzeichnungsmedien (60) zwischen dem Medienspeicher (24) und der Aufzeichnungs-/Wiedergabeanordnung (28); und
einem Leser (22) zum optischen Lesen der Strichcodeetiketten (86) der Aufzeichnungsmedien (60), die auf der Medienbeförderungsanlage transportiert werden, durch Zeilenabstastung mit eindimensionalen Abbildungspixeln,
welche Bibliotheksvorrichtung (10) ferner umfasst:
eine Inventarverarbeitungseinheit (32) zum Lesen der Strichcodeeliketten der Aufzeichnungsmedien (60) durch mehrmaliges Abtasten pro Etikett, während die Medienbeförderungsanlage (18) bewegt wird, und Übermitteln gespeicherter Medieninformationen; und
eine Verarbeitungseinheit (36) zur Spezifikation einer Fehlerursache:
- zum Bestimmen des Vorhandenseins oder Nichtvorhandenseins des Strichcodeetiketts (86) durch Extrahieren von fehlerbehafteten Daten von einem Leseresultat, das durch die Inventarverarbeitungseinheit (32) erhalten wird;
- zum Ausführen eines vorbestimmten Wiederholungsprozesses, bei dem der Leser (22) mittels der Medienbeförde-rungsanlage (18) zu einer Position des Aufzeichnungsmediums, wo die fehlerbehafteten Daten abgetastet werden, bewegt wird und dort gestoppt wird, falls bestimmt wird, dass ein Strichcodeetikett existiert; und
- zum Melden eines Bestimmungsresultates, ohne den Wiederholungsprozess auszuführen, falls bestimmt wird, dass kein Strichcodeetikett existiert,
**dadurch gekennzeichnet, dass**:
die Verarbeitungseinheit (36) zur Spezifikation einer Fehlerursache bewirkt, dass eine Etikettbestimmungsverarbeitungseinheit (44) einen Bestimmungsprozess auf der Basis der Annahme ausführt, dass an einem Aufzeichnungsmedium (60-2) kein Strichcodeetikett (86-2) existiert, falls bei Vollendung des Inventarprozesses bestimmt wird, dass alle von der Vielzahl von Abtastdaten für das eine Aufzeichnungsmedium (60-2) fehlerbehaftete Daten sind und die Leseresultate des vorhergehenden und des nachfolgenden Aufzeichnungsmediums (60-1, 60-3) normal sind.

2. Bibliotheksvorrichtung nach Anspruch 1, bei der die Etikettbestimmungsverarbeitungseinheit (44) angeordnet ist, um zu bestimmen, ob ein vollständiges Strichcodemuster in den fehlerbehafteten Daten existiert oder nicht, und zu bestimmen, falls das Strichcodemuster nicht existiert, dass an dem Medium kein Etikett existiert, vorausgesetzt, dass mehr als ein Schwellenwert von konsekutiven schwarzen Pixeln oder mehr als ein Schwellenwert von konsekutiven weißen Pixeln im Zentrum der Daten existiert.

3. Bibliotheksvorrichtung nach Anspruch 2, bei der die Etikettbestimmungsverarbeitungseinheit (44) angeordnet ist, um das Vorhandensein oder Nichtvorhandensein eines Startcodes oder eines Stoppcodes zu bestimmen, falls das Strichcodemuster in den fehlerbehafteten Daten existiert, und zu bestimmen, dass kein Etikett vorhanden ist, vorausgesetzt, dass mehr als der Schwellenwert von konsekutiven schwarzen Pixeln oder mehr als ein Schwellenwert von konsekutiven weißen Pixeln im Zentrum der Daten existiert, falls weder der Startcode noch der Stoppcode existiert.

4. Bibliotheksvorrichtung nach Anspruch 2, bei der die Etikettbestimmungsverarbeitungseinheit (44) angeordnet ist, um zu bestimmen, ob ein N/W-Verhältnis und eine Breite eines dünnen Elementes innerhalb eines Standardbereiches liegen, falls wenigstens entweder ein Startcode oder ein Stoppcode in den fehlerbehafteten Daten existiert, und zu bestimmen, dass kein Etikett vorhanden ist, vorausgesetzt, dass mehr als ein Schwellenwert von konsekutiven schwarzen Pixeln oder mehr als ein Schwellenwert von konsekutiven weißen Pixeln im Zentrum der Daten existiert, falls das N/W-Verhältnis und die Breite eines dünnen Elementes innerhalb eines Standardbereiches liegen, wobei N die Breite eines dünnen Strichcodeelementes ist und W die Breite eines dicken Strichcodeelementes ist.

5. Bibliotheksvorrichtung nach einem der Ansprüche 2-4, bei der die Etikettbestimmungsverarbeitungseinheit (44) angeordnet ist, um zu bestimmen, ob eine Vielzahl von Abtastdaten, die von demselben Aufzeichnungsmedium gelesen werden, ähnlich ist oder nicht, falls nicht mehr als ein Schwellenwert von schwarzen Pixeln oder weißen Pixeln existiert, und zu bestimmen, dass es sich um ein Etikett unterhalb des Standards handelt, falls die Vielzahl von Abtastdaten ähnlich ist, und anderenfalls zu bestimmen, dass es sich um ein handschriftliches Etikett handelt.

6. Bibliotheksvorrichtung nach Anspruch 1, bei der die Verarbeitungseinheit (36) zur Spezifikation einer Fehlerursache angeordnet ist, um zu bewirken, dass eine Verarbeitungseinheit zur Bestimmung eines Leserausfalls einen Bestimmungsprozess auf der Basis der Annahme ausführt, dass der Leser fehlerhaft ist, falls alle von der Vielzahl von Abtastdaten für das Strichcodeetikett (86) fehlerbehaftete Daten sind und das Leseresultat des vorhergehenden und des nachfolgenden Aufzeichnungsmediums fehlerbehaftete Daten ergibt.

7. Bibliotheksvorrichtung nach Anspruch 6, bei der die Verarbeitungseinheit (46) zur Bestimmung des Leserausfalls angeordnet ist, um ein Weiß/Schwarz-Verhältnis der Abtastdaten zu bestimmen, ein Stoppabtasten zum Lesen auszuführen, indem in einer vorbestimmten Periode das Strichcodeetikett (86) des Aufzeichnungsmediums dem Leser (22) ausgesetzt wird, während der Leser durch die Medienbeförderungsanlage (18) zu dem Aufzeichnungsmedium, wo die fehlerbehafteten Daten abgetastet werden, bewegt wird und dort fest positioniert wird, falls das Weiß/Schwarz-Verhältnis nicht normal ist, das Stoppabtasten vorbestimmte Male zu wiederholen, falls die Stoppabtastdaten nicht decodiert werden können und das Weiß/Schwarz-Verhältnis normal ist, und zu bestimmen, dass der Leser fehlerhaft ist, falls alle von der Vielzahl von Abtastdaten ähnlich sind.

8. Bibliotheksvorrichtung nach Anspruch 7, bei der die Leserausfallbestimmungseinheit (46) angeordnet ist, um zu bestimmen, dass kein Etikett vorhanden ist, falls die Stoppabtastdaten nicht decodiert werden können und das Weiß/Schwarz-Verhältnis nicht normal ist.

9. Bibliotheksvorrichtung nach Anspruch 1, bei der bei einem Wiederholungsprozess durch die Verarbeitungseinheit (36) zur Spezifikation einer Fehlerursache ein Stoppabtasten zum Lesen ausgeführt wird, indem in der vorbestimmten Periode das Strichcodeetikett (86) des Aufzeichnungsmedium dem Leser (22) ausgesetzt wird, so dass sich die Abtastfrequenz innerhalb eines vorbestimmten Lesebereiches auf das Vielfache der Abtastfrequenz der Inventarverarbeitungseinheit beläuft, während dcr Leser (22) durch die Medienbeförderungsanlage zu dem Aufzeichnungsmedium, wo die fehlerbehafteten Daten abgetastet werden, bewegt wird und dort fest positioniert wird.

10. Bibliotheksvorrichtung nach Anspruch 9, bei der bei dem Wiederholungsprozess durch die Verarbeitungseinheit (36) zur Spezifikation einer Fehlerursache der Lesebereich des Lesemediums in eine obere Region, eine mittlere Region und eine untere Region geteilt wird und das Stoppabtasten für jede Region wenigstens fünfmal bei jeder vorbestimmten Bewegungsteilung ausgeführt wird.

11. Verfahren zum Steuern einer Bibliotheksvorrichtung (10) mit:
einem Medienspeicher (24), der eine Vielzahl von Speicherzellen (26-11 bis 26-1n) (26-21 bis 26-2n) zum Speichern von Aufzeichnungsmedien (60) hat, die Strichcodeetiketten (86) haben;
einer Aufzeichnungs-/Wiedergabeanordnung (28-1 bis 28-8) entweder zum Aufzeichnen oder Wiedergeben von Informationen unter Verwendung der Aufzeichnungsmedien (60);
einer Medienbeförderungsanlage (18) zum Befördern der Aufzeichnungsmedien (60) zwischen dem Medienspeicher (24) und der Autzeichnungs-/Wiedergabeanordnung (28-1 bis 28-8); und
einem Leser (22) zum optischen Lesen der Strichcodeetiketten (86) der Aufzeichnungsmedien (60), die auf der Medienbeförderungsanlage (18) transportiert werden, durch Zeilenabtastung mit eindimensionalen Abbildungspixeln,
welches Verfahren zum Steuern der Bibliotheksvorrichtung (10) die Schritte umfasst:
einen Inventarverarbeitungsschritt zum Lesen der Strichcodeetiketten (86) des Aufzeichnungsmediums (60) durch mehrmaliges Abtasten pro Etikett, während die Medienbeförderungsanlage (18) bewegt wird, und Übermitteln gespeicherter Medieninformationen; und
einen Verarbeitungsschritt zur Spezifikation einer Fehlerursache:
- zum Bestimmen des Vorhandenseins oder Nichtvorhandenseins des Strichcodeetiketts durch Extrahieren von fehlerbehafteten Daten von dem Leseresultat, das durch den Inventarverarbeitungsschritt erhalten wird;
- zum Ausführen eines vorbestimmten Wiederholungsprozesses, bei dem der Leser (22) mittels der Medienbeförderungsanlage (18) zu einer Position des Aufzeichnungsmediums, wo die fehlerbehafteten Daten abgetastet werden, bewegt wird und dort gestoppt wird, falls bestimmt wird, dass ein Strichcodeetikett existiert; und
- zum Melden eines Bestimmungsresultates, ohne den Wiederholungsprozess auszuführen, falls bestimmt wird, dass kein Strichcodeetikett existiert,
**dadurch gekennzeichnet, dass**:
der Verarbeitungsschritt zur Spezifikation einer Fehlerursache einen Etikettbestimmungsverarbeitungsschritt bewirkt, um einen Bestimmungsprozess auf der Basis der Annahme auszuführen, dass an einem Aufzeichnungsmedium kein Strichcodeetikett existiert, falls bei Vollendung des Inventarprozesses bestimmt wird, dass alle von der Vielzahl von Abtastdaten für das eine Aufzeichnungsmedium fehlerbehaftete Daten sind und die Leseresultate des vorhergehenden und des nachfolgenden Aufzeichnungsmediums normal sind.

12. Verfahren zum Steuern der Bibliotheksvorrichtung nach Anspruch 11, bei dem der Etikettbestimmungsverarbeitungsschritt bestimmt, ob ein vollständiges Strichcodemuster in den fehlerbehafteten Daten existiert oder nicht, und, falls das Strichcodemuster nicht existiert, bestimmt wird, dass kein Etikett vorhanden ist, vorausgesetzt, dass mehr als ein Schwellenwert von konsekutiven schwarzen Pixeln oder mehr als ein Schwellenwert von konsekutiven weißen Pixeln im Zentrum der Daten existiert.

13. Verfahren zum Steuern der Bibliotheksvorrichtung nach Anspruch 12, bei dem der Etikettbestimmungsverarbeitungsschritt das Vorhandensein oder Nichtvorhandensein eines Startcodes oder eines Stoppcodes bestimmt, falls das Strichcodemuster in den fehlerbehafteten Daten existiert, und bestimmt, dass kein Etikett an dem Medium existiert, vorausgesetzt, dass mehr als ein Schwellenwert von konsekutiven schwarzen Pixeln oder mehr als ein Schwellenwert von konsekutiven weißen Pixeln im Zentrum der Daten existiert, falls weder der Startcode noch der Stoppcode existiert.

14. Verfahren zum Steuern der Bibliotheksvorrichtung nach Anspruch 12, bei dem der Etikettbestimmungsverarbeitungsschritt bestimmt, ob ein N/W-Verhältnis und eine Breite eines dünnen Elementes innerhalb eines Standardbereiches liegen, falls wenigstens entweder ein Startcode oder ein Stoppcode in den fehlerbehafteten Daten existiert, und bestimmt, dass kein Etikett vorhanden ist, vorausgesetzt, dass mehr als ein Schwellenwert von konsekutiven schwarzen Pixeln oder mehr als ein Schwellenwert von konsekutiven weißen Pixeln im Zentrum der Daten existiert, falls das N/W-Verhältnis und die Breite eines dünnen Elementes innerhalb eines Standardbereiches liegen, wobei N die Breite eines dünnen Strichcodeelementes ist und W die Breite eines dicken Strichcodeelementes ist.

15. Computerimplementiertes Programm einer Bibliotheksvorrichtung mit einem Medienspeicher (24), der eine Vielzahl von Speicherzellen zum Speichern von Aufzeichnungsmedien (60) hat, die Strichcodeetiketten haben, einer Aufzeichnungs-/Wiedergabeanordnung (28-1 bis 28-8) entweder zum Aufzeichnen oder Wiedergeben von Informationen unter Verwendung der Aufzeichnungsmedien (60), einer Medienbeförderungsanlage (18) zum Befördern der Aufzeichnungsmedien (60) zwischen dem Medienspeicher (24) und der Aufzeichnungs-/Wiedergabeanordnung (28-1 bis 28-8) sowie einem Leser (22) zum optischen Lesen der Strichcodeetiketten der Aufzeichnungsmedien (60), die auf der Medienbeförderungsanlage (18) transportiert werden, durch Zeilenabtastung mit eindimensionalen Abbildungspixeln, welches computerimplementierte Programm der Bibliotheksvorrichtung (10) dafür ausgelegt ist, um das Verfahren nach einem der Ansprüche 11 bis 14 auszuführen.

## Revendications

1. Appareil de bibliothèque (10) comprenant :
un élément de stockage de supports (24) comportant une pluralité de cellules de stockage (26-11 à 26-1n) (26-21 à 26-2n) pour stocker des supports d'enregistrement (60) comportant des étiquettes de code à barres (86) ;
un dispositif d'enregistrement/reproduction (28) pour enregistrer ou reproduire des informations en utilisant les supports d'enregistrement (60) ;
un transporteur de supports (18) pour transporter les supports d'enregistrement (60) entre l'élément de stockage de supports (24) et le dispositif d'enregistrement/reproduction (28) ; et
un lecteur (22) pour lire optiquement les étiquettes de code à barres (86) des supports d'enregistrement (60) transportés sur le transporteur de supports par un balayage par ligne avec des pixels de formation d'image unidimensionnels,
dans lequel l'appareil de bibliothèque (10) comprend en outre :
une unité de traitement d'inventaire (32) pour lire les étiquettes de code à barres des supports d'enregistrement (60) en effectuant un balayage une pluralité de fois par étiquette tout en déplaçant le transporteur de supports (18) et en notifiant les informations des supports stockés ; et
une unité de traitement de spécification de cause d'erreur (36) :
- pour déterminer la présence ou l'absence de l'étiquette de code à barres (86) en extrayant des données erronées d'un résultat de lecture obtenu par l'unité de traitement d'inventaire (32) ;
- pour exécuter un processus de réessai prédéterminé, dans lequel ledit lecteur (22) est déplacé vers le support d'enregistrement et arrêté à une position de celui-ci où les données erronées sont balayées, au moyen dudit transporteur de supports (18), s'il est déterminé qu'une étiquette de code à barres existe ; et
- pour rapporter un résultat de détermination sans exécuter le processus de réessai, s'il est déterminé qu'une étiquette de code à barres n'existe pas,
**caractérisé en ce que** :
l'unité de traitement de spécification de cause d'erreur (36) amène une unité de traitement de détermination d'étiquette (44) à exécuter un processus de détermination sur la base de la supposition qu'une étiquette de code à barres (86-2) n'existe pas sur un support d'enregistrement (60-2) si, à la fin du processus d'inventaire, il est déterminé que la totalité de la pluralité de données de balayage pour ledit support d'enregistrement (60-2) sont des données erronées et si les résultats de lecture des supports d'enregistrement (60-1, 60-3) précédent et suivant sont normaux.

2. Appareil de bibliothèque selon la revendication 1, dans lequel l'unité de traitement de détermination d'étiquette (44) est agencée pour déterminer si un motif de code à barres entier existe ou non dans les données erronées, et pour déterminer, si le motif de code à barres n'existe pas, qu'une étiquette n'existe pas sur le support, pourvu qu'un nombre de pixels noirs consécutifs supérieur à un seuil ou un nombre de pixels blancs consécutifs supérieur à un seuil existent au centre desdites données.

3. Appareil de bibliothèque selon la revendication 2, dans lequel l'unité de traitement de détermination d'étiquette (44) est agencée pour déterminer la présence ou l'absence d'un code de début ou d'un code d'arrêt si le motif de code à barres existe dans les données erronées, et pour déterminer qu'il n'y a pas d'étiquette pourvu qu'un nombre de pixels noirs consécutifs supérieur au seuil ou un nombre de pixels blancs consécutifs supérieur à un seuil existent au centre desdites données si ni le code de début ni le code d'arrêt n'existent.

4. Appareil de bibliothèque selon la revendication 2, dans lequel l'unité de traitement de détermination d'étiquette (44) est agencée pour déterminer si un rapport N/W et une largeur d'élément mince sont dans une plage standard si au moins l'un d'un code de début ou d'un code d'arrêt existe dans les données erronées, et pour déterminer qu'il n'y a pas d'étiquette pourvu qu'un nombre de pixels noirs consécutifs supérieur à un seuil ou un nombre de pixels blancs consécutifs supérieur à un seuil existent au centre desdites données si le rapport N/W et la largeur d'élément mince sont dans une plage standard, N étant la largeur d'un élément de code à barres mince, W étant la largeur d'un élément de code à barres épais.

5. Appareil de bibliothèque selon l'une quelconque des revendications 2 à 4, dans lequel l'unité de traitement de détermination d'étiquette (44) est agencée pour déterminer si une pluralité de données de balayage lues sur le même support d'enregistrement sont similaires ou non si une valeur supérieure à une valeur de seuil de pixels noirs ou de pixels blancs n'existe pas, et pour déterminer qu'il y a une étiquette de norme inférieure si la pluralité de données de balayage sont similaires, autrement, pour déterminer qu'il y a une étiquette manuscrite.

6. Appareil de bibliothèque selon la revendication 1, dans lequel l'unité de traitement de spécification de cause d'erreur (36) est agencée pour amener une unité de traitement de détermination de défaillance d'un lecteur à exécuter un processus de détermination sur la base de la supposition que le lecteur est défectueux si la totalité de la pluralité de données de balayage pour l'étiquette de code à barres (86) sont des données erronées et si les résultats de lecture des supports d'enregistrement précédent et suivant sont des données erronées.

7. Appareil de bibliothèque selon la revendication 6, dans lequel l'unité de traitement de détermination de défaillance (46) du lecteur est agencée pour déterminer un rapport blanc/noir des données de balayage, exécuter un balayage avec arrêt pour lire en exposant, pendant une période prédéterminée, l'étiquette de code à barres (86) dudit support d'enregistrement audit lecteur (22), alors que le lecteur est déplacé par le transporteur de supports (18) vers le support d'enregistrement et est positionné fixement au niveau de celui-ci où les données erronées sont balayées, si le rapport blanc/noir n'est pas normal, répéter le balayage avec arrêt un nombre prédéterminé de fois si les données de balayage avec arrêt ne peuvent pas être décodées et si le rapport blanc/noir est normal, et déterminer que le lecteur est défectueux si la totalité de la pluralité de données de balayage sont similaires.

8. Appareil de bibliothèque selon la revendication 7, dans lequel l'unité de détermination de défaillance (46) du lecteur est agencée pour déterminer qu'il n'y a pas d'étiquette si les données de balayage avec arrêt ne peuvent pas être décodées et si le rapport blanc/noir n'est pas normal.

9. Appareil de bibliothèque selon la revendication 1, dans lequel, dans un processus de réessai effectué par l'unité de traitement de spécification de cause d'erreur (36), un balayage avec arrêt est exécuté pour lire en exposant, pendant la période prédéterminée, l'étiquette de code à barres (86) dudit support d'enregistrement audit lecteur (22), de sorte que la fréquence de balayage dans une plage de lecture prédéterminée devienne le multiple de la fréquence de balayage de l'unité de traitement d'inventaire, alors que le lecteur (22) est déplacé par le transporteur de supports vers le support d'enregistrement et est positionné fixement au niveau de celui-ci où les données erronées sont balayées.

10. Appareil de bibliothèque selon la revendication 9, dans lequel, dans le processus de réessai effectué par l'unité de traitement de spécification de cause d'erreur (36), la plage de lecture du support de lecture est divisée en une région supérieure, une région centrale et une région inférieure, et le balayage avec arrêt de chaque région est exécuté au moins cinq fois à chaque pas de déplacement prédéterminé.

11. Procédé de commande d'un appareil de bibliothèque (10) comprenant :
un élément de stockage de supports (24) comportant une pluralité de cellules de stockage (26-11 à 26-1n) (26-21 à 26-2n) pour stocker des supports d'enregistrement (60) comportant des étiquettes de code à barres (86),
un dispositif d'enregistrement/reproduction (28-1 à 28-8) pour enregistrer ou reproduire des informations en utilisant les supports d'enregistrement (60),
un transporteur de supports (18) pour transporter les supports d'enregistrement (60) entre l'élément de stockage de supports (24) et le dispositif d'enregistrement/reproduction (28-1 à 28-8),
et un lecteur (22) pour lire optiquement les étiquettes de code à barres (86) des supports d'enregistrement (60) transportés sur le transporteur de supports (18) par un balayage par ligne avec des pixels de formation d'image unidimensionnels,
le procédé de commande de l'appareil de bibliothèque (10) comprenant les étapes suivantes :
une étape de traitement d'inventaire pour lire les étiquettes de code à barres (86) des supports d'enregistrement (60) en effectuant un balayage une pluralité de fois par étiquette tout en déplaçant le transporteur de supports (18) et en notifiant les informations des supports stockés ; et
une étape de traitement de spécification de cause d'erreur :
- pour déterminer la présence ou l'absence de l'étiquette de code à barres en extrayant des données erronées du résultat de lecture obtenu par l'étape de traitement d'inventaire ;
- pour exécuter un processus de réessai prédéterminé dans lequel ledit lecteur (22) est déplacé vers le support d'enregistrement et arrêté à une position de celui-ci où les données erronées sont balayées, au moyen dudit transporteur de supports (18), s'il est déterminé qu'une étiquette de code à barres existe ; et
- pour rapporter un résultat de détermination sans exécuter le processus de réessai s'il est déterminé qu'une étiquette de code à barres n'existe pas,
**caractérisé en ce que** :
l'étape de traitement de spécification de cause d'erreur amène une étape de traitement de détermination d'étiquette à exécuter un processus de détermination sur la base de la supposition qu'une étiquette de code à barres n'existe pas sur un support d'enregistrement si, à la fin du processus d'inventaire, il est déterminé que la totalité de la pluralité de données de balayage pour ledit support d'enregistrement sont des données erronées et si les résultats de lecture des supports d'enregistrement précédent et suivant sont normaux.

12. Procédé de commande de l'appareil de bibliothèque selon la revendication 11, dans lequel l'étape de traitement de détermination d'étiquette détermine si un motif de code à barres entier existe ou non dans les données erronées et, si le motif de code à barres n'existe pas, il est déterminé qu'il n'y a pas d'étiquette pourvu qu'un nombre de pixels noirs consécutifs supérieur à un seuil ou un nombre de pixels blancs consécutifs supérieur à un seuil existent au centre desdites données.

13. Procédé de commande de l'appareil de bibliothèque selon la revendication 12, dans lequel l'étape de traitement de détermination d'étiquette détermine la présence ou l'absence d'un code de début ou d'un code d'arrêt si le motif de code à barres existe dans les données erronées, et déterminer qu'une étiquette n'existe pas sur le support, pourvu qu'un nombre de pixels noirs consécutifs supérieur à un seuil ou un nombre de pixels blancs consécutifs supérieur à un seuil existent au centre desdites données si ni le code de début ni le code d'arrêt n'existent.

14. Procédé de commande de l'appareil de bibliothèque selon la revendication 12, dans lequel l'étape de traitement de détermination d'étiquette détermine si un rapport N/W et une largeur d'élément mince sont dans une plage standard si au moins l'un d'un code de début ou d'un code d'arrêt existe dans les données erronées, détermine qu'il n'y a pas d'étiquette pourvu qu'un nombre de pixels noirs consécutifs supérieur à un seuil ou un nombre de pixels blancs consécutifs supérieur à un seuil existent au centre desdites données si le rapport N/W et la largeur d'élément mince sont dans une plage standard, N étant la largeur d'un élément de code à barres mince, W étant la largeur d'un élément de code à barres épais.

15. Programme mis en oeuvre par un ordinateur d'un appareil de bibliothèque comprenant un élément de stockage de supports (24) comportant une pluralité de cellules de stockage pour stocker des supports d'enregistrement (60) comportant des étiquettes de code à barres, un dispositif d'enregistrement/reproduction (28-1 à 28-8) pour enregistrer ou reproduire des informations en utilisant les supports d'enregistrement (60), un transporteur de supports (18) pour transporter les supports d'enregistrement (60) entre l'élément de stockage de supports (24) et le dispositif d'enregistrement/reproduction (28-1 à 28-8), et un lecteur (22) pour lire optiquement les étiquettes de code à barres des supports d'enregistrement (60) transportés sur le transporteur de supports (18) par un balayage par ligne avec des pixels de formation d'image unidimensionnels, le programme mis en oeuvre par un ordinateur de l'appareil de bibliothèque (10) étant adapté pour exécuter le procédé selon l'une quelconque des revendications 11 à 14.
